(19) Europäisches Patentamt
European Patent Office
Office européen des brevets

(11) **EP 4 550 112 A1**

(12) **EUROPEAN PATENT APPLICATION**

(43) Date of publication:
**07.05.2025 Bulletin 2025/19**

(21) Application number: **24205838.6**

(22) Date of filing: **10.10.2024**

(51) International Patent Classification (IPC):
**G06F 7/483** $^{(2006.01)}$  **G06F 7/499** $^{(2006.01)}$

(52) Cooperative Patent Classification (CPC):
**G06F 7/49947; G06F 7/483**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.11.2023 GB 202316740**

(71) Applicant: **Imagination Technologies Limited**
**Kings Langley, Hertfordshire WD4 8LZ (GB)**

(72) Inventors:
• **FERRERE, Thomas**
**Kings Langley WD4 8LZ (GB)**
• **FREIBURGHAUS, Max**
**Kings Langley WD4 8LZ (GB)**
• **ROVERS, Kenneth**
**Kings Langley WD4 8LZ (GB)**

(74) Representative: **Cooney, Daniel Thomas**
**Imagination Technologies Ltd**
**Patent Dept.**
**Home Park Estate**
**Kings Langley, Hertfordshire WD4 8LZ (GB)**

(54) **METHOD AND SYSTEM FOR ROUNDING A SUBNORMAL NUMBER**

(57) A method of rounding a floating-point number in an Extended Exponent Range, herein "EER", that would be a denormal floating-point number represented in an Unextended Exponent Range, herein "UER" is disclosed. The method may comprise the steps of receiving, at an arithmetic unit, a plurality of input numbers in the EER representation, each input number comprising a sign bit ($s_i$), exponent bits ($e_i$) and mantissa bits ($m_i$); performing an arithmetic operation to produce an output number in the EER representation comprising a sign bit ($s_a$), an exponent bits ($e_a$) and mantissa bits ($m_a$); constructing a rounding mask based on the exponent bits ($e_a$) computed by the arithmetic operation; and applying the rounding mask to the output number in the EER representation to round the output number to correct position as if rounding in the UER representation.

FIG. 4

EP 4 550 112 A1

**Description**

CROSS-REFERENCE TO RELATED APPLICATION

This application claims priority from UK patent application GB2316740.6 filed on 1st November 2023, which is herein incorporated by reference in its entirety.

TECHNICAL FIELD

The invention relates to rounding a floating-point number in particular rounding a number represented in Extended Exponent Range (EER).

BACKGROUND

Most computing systems use number formats, typically in binary notation or base 2, for performing various computations. These number formats include fixed-point or floating-point number formats. A fixed-point number format can be relatively straightforward to work with, but can only represent a limited range of values. Therefore, floating-point number formats are used in most of the modern computing systems to provide a trade-off between range and precision.

A floating-point number comprises a mantissa (m) having a bit length of 'b' bits, an exponent (e) having a bit length of 'a' bits and optionally a sign bit (s) to represent a binary number. In some widely used formats such as IEEE-754 standard, the exponent is biased (i.e. offset) by a value (c) so as to represent numbers smaller than 1 and the exponent is also used to encode exceptional values at its end points. The bias (c) is typically calculated as $2^{k-1} - 1$, where k is the number of bits in the exponent. For non-extremal values of e, a normal floating-point number x in IEEE-754 standard format represents $(-1)^s 2^{e-c}(1.m)$. The number is generally normalized and features a nonzero leading bit before the radix point, denoted 1.m in binary and as the significand n. When explicitly representing the whole significand, the first bit (a 1 in the case of normal numbers) may be termed the 'leading significand bit' to distinguish it from the mantissa bits also represented in the significand. For a 32-bit floating-point number, the value of the (biased) exponent is limited to a range of -127 to 128. However, in such cases, numbers smaller than $1.0 * 2^{-127}$ are represented or considered as zero. Hence, for extremal values of e, i.e. when e = 0, the floating-point number x in IEEE-754 standard can be represented as a denormal number $(-1)^s 2^{1-c}(0.m)$ (in other words, the leading significand bit of the explicitly represented whole significand is always a 0 for denormal numbers). This includes the value 0 which is obtained by letting m = 0. Representing the floating-point number as a denormal number is convenient for enforcing gradual underflow. Thus, floating-point numbers can be used to represent very small or very large numbers precisely using scientific notation, in binary or in some other base. The use of floating-point numbers in arithmetic computations provides varying degrees of precision depending on the bit length or type of floating-point format used.

However, representing the floating-point number as denormal number adds further latency or area and cost to the critical path of the design especially for computations whereby the denormal number is normalized or rounded. This is because the leading 1 of the denormal number is in an arbitrary position. Consider the case when performing an arithmetic operation such as multiplication of two denormal numbers, or multiplication of a normal number and a denormal number, which may produce an output denormal number. Further, the output denormal number may need to be normalized or rounded. In order to perform operations such as normalizing the output denormal number, extra steps are performed to find the position of the leading 1. This increases the delay to the critical path and therefore such operations are expensive.

The same considerations apply when performing operations such as rounding the denormal number. Rounding is a process of replacing a precise number with an approximate value having a shorter, simpler, or more explicit representation. There are many known techniques or methods of performing rounding. Some of the methods include: Round Up; Round Down; Round Towards Zero; Round Away from Zero; Round To Nearest, Ties To Even and the like. While rounding a number, it is decided whether a number should be rounded down to the lower approximate value or rounded up to the upper approximate value based on the number of bits to which a floating-point number is rounded. The mantissa (m) is either truncated to round down or incremented by 1 and truncated to round up. A combination of guard, round and sticky bits (which is explained later) of the floating-point number is used to choose between the round up or round down option. Normally to save time in the critical path, in the case of normal numbers, the truncated output and the truncated incremented output are generated simultaneously. Further, based on the guard, round and sticky bits, one of the truncated output and the truncated incremented output is mux-ed out as the rounded output number. However, this is not possible in case of a denormal number where in the absence of additional processing the increment by 1 applies in an arbitrary position.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is provided a method of rounding a floating-point number in an Extended Exponent Range, herein "EER", that would be a denormal floating-point number represented in an Unextended Exponent Range, herein "UER". The method may comprise the steps of receiving, at an arithmetic unit, a plurality of input numbers in the EER representation, each input number comprising a sign bit ($s_i$), exponent bits ($e_i$) and mantissa bits ($m_i$); performing an arithmetic operation to produce an output number in the EER representation comprising a sign bit ($s_a$), an exponent bits ($e_a$) and mantissa bits ($m_a$); constructing a rounding mask based on the exponent bits ($e_a$) computed by the arithmetic operation; and applying the rounding mask to the output number in the EER representation to round the output number to correct position as if rounding in the UER representation.

Optionally, each number among the plurality of input numbers is one of a normal number or a denormal number in EER representation.

Optionally, the output number is one of a normal number or a denormal number in EER representation.

Optionally, the rounding mask is a string of zeros and ones.

Optionally, constructing the rounding mask comprises pre-aligning the rounding mask with a leading 1 at the position of the weight $2^{(1-bias-mw)}$, where mw is the number of mantissa bits and bias is the exponent bias in the UER representation.

Optionally, constructing the rounding mask comprises pre-aligning the rounding mask based on the exponent computed by the arithmetic operation ($e_a$).

Optionally, constructing the predetermined rounding mask further comprises a step of normalizing the rounding mask by shifting the rounding mask to the left by the same number of bits required to normalize the output number.

Optionally, the method further comprises generating normalized mantissa bits ($m_r$) of the output number.

Optionally, applying the rounding mask comprises performing a bitwise OR operation between the normalized rounding mask and normalized mantissa bits ($m_r$) of the output number.

Optionally, the method further comprises deriving guard round and sticky bits based on the normalized mantissa bits ($m_r$) of the output number and the rounding mask.

Optionally, the method further comprises determining and selecting a truncated output number by truncating the normalized mantissa bits ($m_r$) of the output number or a truncated incremented output number by incrementing the normalized mantissa bits ($m_r$) of the output number and truncating the normalized mantissa bits ($m_r$) of the output number.

Optionally, the selection is based on the derived guard, round and sticky bits.

Optionally, determining the truncated output number comprises setting the non-representable trailing bits of the normalized mantissa bits ($m_r$) of the output number to zero.

Optionally, determining the truncated incremented output number comprises incrementing the normalized mantissa bits ($m_r$) at the first representable position and setting all the below trailing bits to zero.

According to a second aspect there is provided a hardware implementation for rounding a floating-point number in an Extended Exponent Range, herein "EER", that would be a denormal floating-point number represented in an Unextended Exponent Range, herein "UER". The hardware implementation can comprise arithmetic unit configured to: receive a plurality of input numbers in the EER representation, each input number comprising a sign bit ($s_i$), exponent bits ($e_i$) and mantissa bits (m); and perform an arithmetic operation to produce an output number in the EER representation comprising a sign bit ($s_a$), an exponent bits ($e_a$) and mantissa bits ($m_a$); mask constructing unit configured to construct a rounding mask based on the exponent bits ($e_a$) computed by the arithmetic operation; and rounding unit configured to apply the rounding mask to the output number in the EER representation to round the output number to correct position as if rounding in the UER representation.

Optionally, the mask constructing unit is configured to construct the rounding mask by pre-aligning the rounding mask based on the exponent bits ($e_a$) computed by the arithmetic operation.

Optionally, the mask constructing unit is further configured to construct the rounding mask by performing a step of normalizing the rounding mask by shifting the rounding mask to the left by the same number of bits required to normalize the output number.

Optionally, the hardware implementation further comprises a renormalizing unit configured to generate normalized mantissa bits ($m_r$) of the output number.

Optionally, the rounding unit is configured apply the rounding mask by performing a bitwise OR operation between the normalized rounding mask and normalized mantissa bits ($m_r$) of the output number.

According to a third aspect there is provided computer readable code configured to cause the method of any of the above-mentioned variations of the first aspect to be performed when the code is run.

According to a fourth aspect there is provided a computer readable storage medium having encoded thereon the computer readable code of the third aspect.

According to a fifth aspect there is provided a method of rounding a floating-point number represented in an Unextended Exponent Range, herein "UER", representation when represented in an Extended Exponent Range, herein "EER", representation. The method may comprise receiving, at an arithmetic unit, a plurality of input numbers in the EER representation, each input number comprising a sign bit ($s_i$), exponent bits ($e_i$) and mantissa bits ($m_i$); performing an iterative arithmetic operation to produce a partial output number of an actual output number in the EER representation comprising a sign bit ($s_a$), exponent bits ($e_a$) and mantissa bits ($m_a$); storing a tracking value in a mask tracking unit; updating a rounding mask in a first register based on the tracking value in the mask tracking unit; and applying the updated rounding mask to each partial output number in each step to round the actual output number to correct position as if rounding in the UER representation.

Optionally, each number among the plurality of input numbers is one of a normal number or a denormal number in EER representation.

Optionally, applying the updated rounding mask to the partial output number comprises performing bitwise operation between the updated rounding mask and the partial output number.

Optionally, the rounding mask stored in the first register is determined based on the mantissa bit length and the step size.

Optionally, the rounding mask is a string of zeros and ones.

Optionally, updating the rounding mask comprises: deriving a predetermined tracking value from a memory to the mask tracking unit, wherein the tracking value is predetermined based on the exponent bits ($e_i$) of the input numbers and step size; incrementing the tracking value in the mask tracking unit by the step size; and shifting the bits of the compressed rounding mask in the first register to the left by one bit position every time the tracking value in the mask tracking unit is incremented.

Optionally, updating the rounding mask further comprises indicating to the first register to stop shifting the compressed rounding mask when the tracking value overflows.

Optionally, updating the rounding mask further comprises fanning out the bits of the shifted rounding mask registered in the first register by a factor of step size to be aligned with the mantissa bits of the significand.

Optionally, fanning out the bits of the rounding mask in the first register is performed by padding the bits of the rounding mask to either side to align the rounding mask with the mantissa bits of the significand.

Optionally, updating the rounding mask further comprises of shifting the fanned out rounding mask by a fixed amount based on a mask tracking offset of the tracking value.

Optionally, the mask tracking offset of the tracking value is determined based on the step size.

Optionally, the method further comprises deriving guard round and sticky bits based on the mantissa bits of the actual output number and the rounding mask.

Optionally, the method further comprises determining and selecting a truncated output number by truncating the mantissa bits of the output number or a truncated incremented output number by incrementing the mantissa bits of the output number and truncating the mantissa bits of the output number.

Optionally, wherein the selection is based on the derived guard, round and sticky bits.

Optionally, determining truncated output number is performed by setting the non-representable trailing bits mantissa bits of the output number to zero.

Optionally, determining truncated incremented output number is performed by incrementing the mantissa bits at the first representable position and setting all the below trailing bits to zero.

According to a sixth aspect there is provided a hardware implementation for rounding a floating-point number represented in an Unextended Exponent Range, herein "UER", representation when represented in an Extended Exponent Range, herein "EER", representation n. The hardware implementation can comprise arithmetic unit configured to: receiving, at an arithmetic unit, a plurality of input numbers in the EER representation, each input number comprising a sign bit ($s_i$), exponent bits ($e_i$) and mantissa bits ($m_i$); and performing an iterative arithmetic operation to produce a partial output number of an actual output number in the EER representation comprising a sign bit ($s_a$), exponent bits ($e_a$) and mantissa bits ($m_a$); mask constructing unit comprising: a first register configured to store rounding mask; a mask tracking unit configured to store a tracking value; wherein the mask constructing unit is configured to update the rounding mask based on the tracking value in the mask tracking unit; and rounding unit configured to apply the rounding mask to each partial output number in each step to round the actual output number to correct position as if rounding in the UER representation.

Optionally, the rounding unit applies the updated rounding mask to the partial output number by performing a bitwise operation between the updated rounding mask and the partial output number.

Optionally, the first register stores the rounding mask pre-determined based on the mantissa bit length and the step size.

Optionally, mask construction unit updates the rounding mask comprises the steps of: deriving a predetermined tracking value from a memory to the mask tracking unit, wherein the tracking value is predetermined based on the

exponent bits ($e_i$) of the input numbers and step size ; incrementing the tracking value in the mask tracking unit by the step size; and shifting the bits of the compressed rounding mask in the first register to the left by one bit position every time the tracking value in the mask tracking unit is incremented.

Optionally, the mask construction unit updates the rounding mask by further indicating to the first register to stop shifting the compressed rounding mask when the tracking value overflows.

Optionally, the mask construction unit further comprises a mask fanout unit configured to update the rounding mask by fanning out the bits of the shifted rounding mask registered in the first register by a factor of step size to be aligned with the mantissa bits of the significand.

Optionally, the mask fanout unit performs fanning out the bits of the rounding mask in the first register is performed by padding the bits of the rounding mask to either side to align the rounding mask with the mantissa bits of the significand.

Optionally, the mask construction unit further comprises a shifter configured to updating the rounding mask by shifting the fanned out rounding mask by a fixed amount based on mask tracking offset of the tracking value.

According to a seventh aspect there is provided computer readable code configured to cause the method of any of the above-mentioned variations of the fifth aspect to be performed when the code is run.

According to an eighth aspect there is provided a computer readable storage medium having encoded thereon the computer readable code of the seventh aspect.

According to a ninth aspect there is provided a method of converting the format of a floating-point number. The method may comprise: receiving an input floating-point number in a first floating-point format, the input floating-point number comprising a sign bit ($s_i$), exponent bits ($e_i$) and mantissa bits ($m_i$); constructing a rounding mask based on the exponent bits ($e_i$) of the input number; and applying the rounding mask to the input floating-point number to round the input floating-point number for correct representation in a second floating-point format.

Optionally, rounding mask is a string of zeros and ones.

Optionally, rounding mask comprises a leading 1 at the position of the weight $2^{(1-bias-mw)}$.

Optionally, the method further comprises deriving guard, round and sticky bits based on the mantissa bits ($m$) of the input floating-point number and the rounding mask.

Optionally, applying the rounding mask to the input floating-point number to round the input floating-point number for correct representation in a second floating-point format further comprises determining and selecting either a truncated output number by truncating the mantissa bits ($m_i$) of the input floating-point number or a truncated incremented output number with an incremented least significant bit compared to the truncated output number.

Optionally, the selection is based on the derived guard, round and sticky bits.

Optionally, the mantissa bits ($m$) of the input floating-point number comprise trailing bits that are non-representable in the second floating-point format, and determining the truncated output number comprises applying the mask to the mantissa bits ($m$) of the input floating-point number to set the non-representable trailing bits to zero.

Optionally, the mantissa bits ($m$) of the input floating-point number comprise a bit that is at the least significant representable position in the second floating-point format, and wherein determining the truncated incremented output number comprises applying the mask to the mantissa bits ($m$) of the input floating-point number to increment the bit that is at the least significant representable position in the second floating-point format and to set any less significant bits to zero.

Optionally, constructing the rounding mask comprises pre-aligning the rounding mask based on the exponent bits ($e_i$) of the input number.

Optionally, applying the rounding mask to the input floating-point number to round the input floating-point number for correct representation in a second floating-point format comprises: generating normalized mantissa bits in the second floating-point format based on the input floating-point number; a step of normalizing the rounding masked based on a bit shift required to normalize the input floating-point number in the second floating-point format; and applying the normalized rounding mask to the normalized mantissa bits in the second floating-point format.

According to a tenth aspect there is provided a hardware implementation for converting the format of a floating-point number. The hardware implementation can comprise: an input configured to an input floating-point number in a first floating-point format, the input floating-point number comprising a sign bit ($s_i$), exponent bits ($e_i$) and mantissa bits ($m_i$); a mask alignment unit configured to construct a rounding mask based on the exponent bits ($e_i$) of the input numbers; and a rounding unit configured to apply the rounding mask to the input floating-point number to round the input floating-point number for correct representation in a second floating-point format.

Optionally, the mask constructing unit is configured to construct the rounding mask by pre-aligning the rounding mask based on the exponent bits ($e_i$) of the input numbers.

Optionally, the mask constructing unit is further configured to perform a step of normalizing the mask by shifting the rounding mask to the based on a bit shift required to normalize the input floating-point number in the second floating-point format.

Optionally, the rounding unit is configured to generate normalized mantissa bits in the second floating-point format based on the input floating-point number.

Optionally, the rounding unit is configured apply the normalized rounding mask to the normalized mantissa bits in the second floating-point format.

According to an eleventh aspect there is provided computer readable code configured to cause the method of any of the above-mentioned variations of the ninth aspect to be performed when the code is run.

According to a twelfth aspect there is provided a computer readable storage medium having encoded thereon the computer readable code of the eleventh aspect.

The hardware implementation for rounding a floating-point number, and/or the hardware implementation for converting the format of a floating-point number, may be embodied in hardware on an integrated circuit. There may be provided a method of manufacturing, at an integrated circuit manufacturing system, a hardware implementation for rounding a floating-point number and/or a hardware implementation for converting the format of a floating-point number. There may be provided an integrated circuit definition dataset that, when processed in an integrated circuit manufacturing system, configures the system to manufacture a hardware implementation for rounding a floating-point number and/or a hardware implementation for converting the format of a floating-point number. There may be provided a non-transitory computer readable storage medium having stored thereon a computer readable description of a hardware implementation for rounding a floating-point number that, when processed in an integrated circuit manufacturing system, causes the integrated circuit manufacturing system to manufacture an integrated circuit embodying a hardware implementation for rounding a floating-point number. There may be provided a non-transitory computer readable storage medium having stored thereon a computer readable description of a hardware implementation for converting the format of a floating-point number that, when processed in an integrated circuit manufacturing system, causes the integrated circuit manufacturing system to manufacture an integrated circuit embodying a hardware implementation for converting the format of a floating-point number.

There may be provided an integrated circuit manufacturing system comprising: a non-transitory computer readable storage medium having stored thereon a computer readable description of the hardware implementation for rounding a floating-point number; a layout processing system configured to process the computer readable description so as to generate a circuit layout description of an integrated circuit embodying the hardware implementation for rounding a floating-point number; and an integrated circuit generation system configured to manufacture the hardware implementation for rounding a floating-point number according to the circuit layout description. There may be provided an integrated circuit manufacturing system comprising: a non-transitory computer readable storage medium having stored thereon a computer readable description of the hardware implementation for converting the format of a floating-point number; a layout processing system configured to process the computer readable description so as to generate a circuit layout description of an integrated circuit embodying the hardware implementation for converting the format of a floating-point number; and an integrated circuit generation system configured to manufacture the hardware implementation for converting the format of a floating-point number according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

FIG. 1 is a block diagram of a rounding unit illustrating this conventional method of rounding a number in EER representation;

FIG. 2 is a block diagram illustrating rounding unit rounding a number represented in EER representation) using a rounding mask;

FIG.3A illustrates an example of rounding an output number using a rounding mask in RNE mode;

FIG.3B illustrates an example of rounding an output number using a rounding mask in RTA mode;

FIG.3C illustrates an example of using a generalised mask to derive a truncated output;

FIG.3D illustrates an example of using a generalised mask to derive a truncated incremented output;

FIG.4 illustrates a block diagram of a hardware for rounding a floating-point number in an EER representation;

FIG. 5 and FIG. 6 shows an example of rounding an output number using a rounding mask;

FIG. 7 illustrates another block diagram of a hardware for rounding a floating-point number in EER representation;

FIG. 8 shows an example of rounding an output number using a rounding mask;

FIG. 9 illustrates yet another block diagram of a hardware for rounding a floating-point number in EER representation;

FIG. 10 illustrates an example of generating a rounding mask when using the hardware in FIG. 9;

Figure 11 shows a computer system in which a graphics processing system is implemented;

Figure 12 shows an integrated circuit manufacturing system for generating an integrated circuit embodying a graphics processing system; and

FIG.13 is a block diagram of a hardware format conversion unit.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As discussed earlier, when performing arithmetic operations between two denormal numbers or a normal number and a denormal number, to normalize the output number extra steps are performed to find the position of the leading 1. For example, when two normal numbers 'a' and 'b' are multiplied to produce a normal number, then the result would have a leading 1 bit either at the Most Significant Bit (MSB) position or the second MSB position. Therefore, to normalize the output, the output is shifted by 1 position or 2 positions to the left as required.

However, when two denormal numbers or a normal number and a denormal number are multiplied, the output obtained may be a denormal number and hence will have a leading 1 bit at an arbitrary position from the MSB position to the Least Significant Bit (LSB position) along the mantissa bit length. Hence, in order to normalize the output, the output needs to be shifted by an arbitrary number of positions to the left depending on where the leading 1 bit is.

One way of dealing with this issue is to use a non-standard representation in which the exponent range is extended by a 1 bit. This representation is known as Extended Exponent Range (EER) representation. In the EER representation, denormal numbers can be represented as normal numbers. The denormal numbers represented as normal numbers in EER representation are hereinafter also referred to as subnormal numbers. For example, a half-precision (F16) number 0.00000.0001010000 with one sign bit, five exponent bits and 10 mantissa bits, represents the value $2^{(1-bias)} 0.0001010000_2 = 2^{(-14)} (2^{(-4)} + 2^{(-6)}) = 2^{(-18)} + 2^{(-20)}$ (in this format we have bias=$2^{(5-1)}-1=15$). This number can be represented in an extended exponent range F16_norm format as 0.001101.0100000000 with one sign bit, six exponent bits (i.e. with an extra exponent bit) and 10 mantissa bits. This format therefore has the larger bias of bias norm=$2^{(6-1)}-1=31$ and can hence represent unbiased exponent values below those of the original F16 format, as demonstrated (i.e. represented in F16_norm, 0.001101.0100000000=$2^{(13-31)} (1+2^{(-2)}) = 2^{(-18)} + 2^{(-20)}$, which is the same value as the original denormal F16 number). This format can also represent all unbiased exponent values falling within the normal range of the original format. For example, also using half-precision, the number 1.10001.0011100001= $-2^{(17-15)}$ $1.0011100001_2 = 100.11100001_2$ in F16 can be represented as 1.100001.0011100001=$-2^{(33-31)}$ $1.0011100001_2 = 100.11100001_2$ in F16_norm.

Hence, denormal numbers can be represented as normal numbers in EER representation and hence the numbers can be normalized without incurring additional cost or latency. One main caveat of representing the denormal numbers as subnormal numbers (i.e., normal numbers in EER representation) is that the process of rounding becomes expensive as rounding position varies according to the new exponent value in the EER representation.

The output of an arithmetic operation which is a normal number may be rounded using any of the rounding modes discussed earlier. The output may be required to be rounded to the mantissa bit length that can be stored in a destination memory or register. Rounding of normal numbers is generally performed by choosing one of the two representable values (or options) that are surrounding the exact result obtained after an arithmetic operation. As discussed earlier, whether the number needs to be rounded down to a lower representable value or rounded up to a higher representable value is decided based on the guard, round, and sticky bits of the number. Different conventions for referring to different bits during rounding are known. For the purposes of this document, the following convention is observed: the bit at the rounding position (i.e., the least significant position in the mantissa bit length to which an output number is rounded after the radix point) is called a guard bit, the bit immediately to the right of the rounding position is known as the round bit and the bits further to the right after the round bit are reduced to form a sticky bit. The sticky bit is high if and only if at least one bit after the round bit is high.

Generally, to choose the lower representable value, we find a truncated value/output by truncating (i.e. removing) the bits in the mantissa up to (and including) the rounding position from the radix point. To choose the higher representable value, we find a truncated incremented value/output by incrementing the bit at the rounding position by 1 bit and then truncating the bits in the mantissa up to (and including) the bit in the rounding position. To save time in the critical path, typically, the truncated output and the truncated incremented output are generated beforehand as the incrementing takes time, and based on the guard, round and sticky bit, one of the truncated output and the truncated incremented output is mux-ed out as the rounded output number. For example, in the 'Round To Nearest, Ties To Even' rounding scheme the truncated output is mux-ed out if the round bit is a '0' bit and the truncated incremented output is mux-ed out if the original round bit is a '1' bit and the sticky bit is a '1' bit. When the round bit is a one bit and the sticky bit is a zero bit, then the guard bit is used to resolve the tie (i.e. the exact result is exactly half-way between the two nearest representable values); if the guard bit is a zero bit the truncated output is mux-ed out and if the guard bit is a '1' bit the truncated increment output is mux-ed out as the rounded output number.

The output of an arithmetic operation which is a subnormal number (i.e., denormal number represented as normal number) may be rounded up or rounded down using the similar method as explained above for normal number. However, to produce the same output values after rounding as we would have obtained after rounding the denormal number in original format, instead of selecting between truncated, and truncated incremented output we need to either truncate and/or increment at the appropriate arbitrary position (which is a higher position with fewer bits of precision) and compute the guard, round and sticky bits at that appropriate position. This is because the rounding position and the guard, sticky and round bit are at a position that isn't fixed but depends on the exponent of the output pre-rounding. In other words, whilst use of an extended exponent range simplifies the use of denormal numbers in mathematical operations such as addition or multiplication, rounding remains difficult because the rounding needs to be done to give a consistent result with that which would have been obtained by performing the operation in the original exponent range.

Therefore, in order to perform rounding of the subnormal number the rounding position needs to be determined first. The rounding position could be p bits after radix point, rather than the mantissa bit length of the output number, which is an arbitrary point due to the extended exponent range. Thus, rounding a subnormal number becomes more expensive as extra steps are required to find the arbitrary rounding point and additional hardware requirements are needed to perform rounding as explained below. Further, it is no longer possible to determine the truncated output and the truncated incremented output beforehand as the rounding position could be in any arbitrary point.

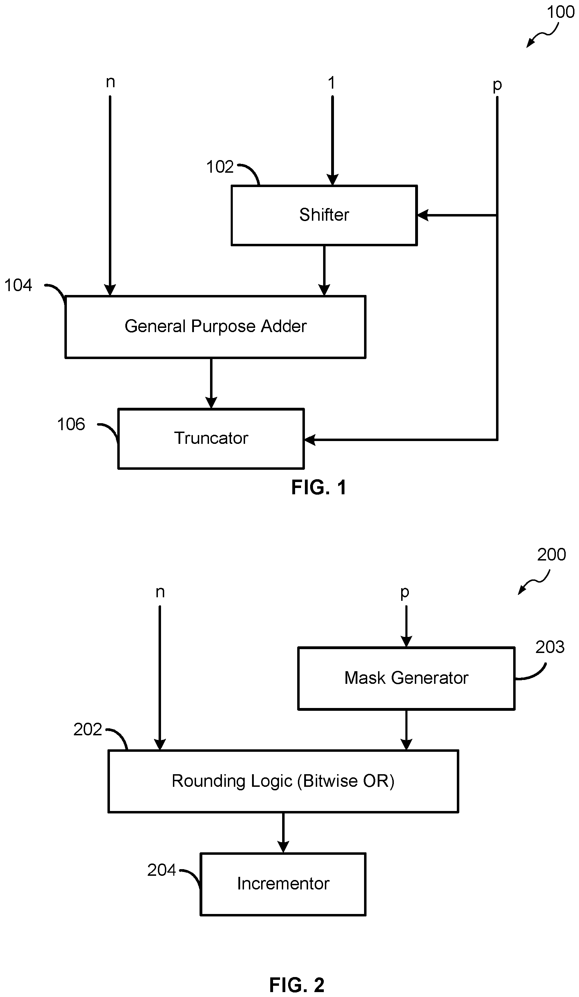

FIG. 1 is a block diagram of a rounding unit illustrating a conventional method of rounding a subnormal number (i.e., denormal number represented as normal number in EER representation) to a truncated incremented value in more detail. As discussed earlier, the rounding position for a subnormal number would be at an arbitrary position p from the radix point. The arbitrary position p may be predetermined or may be determined in parallel to performing the arithmetic operation. Further, the guard, round and sticky bits are identified based on rounding position (i.e. the value of p) as discussed earlier. The guard bit would be the mantissa bit $x_p$ at position p, the round bit would be the mantissa bit $x_{p+1}$ at position p+1 from the radix point and the so-called sticky bit is a 1 if any bit in a less significant position than the round bit is a 1 (and is 0 otherwise). Once the rounding position p is known, to determine a truncated incremented output, the subnormal number needs to be incremented at the arbitrary position.

The rounding unit 100 in FIG. 1 comprises a shifter 102 and a general-purpose adder 104. A rounding increment i.e., a '1' bit is provided as a first input to the shifter 102 and the arbitrary rounding position p is provided as a second input to the shifter 102. The shifter 102 shifts the '1' bit by p positions to the right to obtain the rounding increment at the rounding position at which the truncated output needs to be incremented. The output of the shifter 102 is provided as an output to the general purpose adder 104. Further the significand n of the output number is provided as another input to the general purpose adder 104. The general-purpose adder 104 adds the rounding increment to the significand n at the correct position p. Thus, the mantissa of the output number m is incremented at the correct position p. However, as the mask only affects the rounding position and (potentially) the bits above it, the least significant bits (LSBs) below the rounding position will remain in their previous form. In order to truncate the incremented value at the rounding position, those LSBs can be set to zero by the application of a further mask based on the rounding position p. Fig. 1 shows a truncator 106, which can perform the truncation, for example, by performing a bitwise AND between the output of the adder 104 and a mask with the bits below the rounding position p being set to zero and the remaining bits set to one. The bits set to zero may subsequently be discarded. The (un-incremented) truncated output can be obtained by setting the LSB bits below the rounding point to zero (and subsequently discarding them) in the same way.

Thus, as the rounding position is at an arbitrary position, a large general purpose adder is required for incrementing the output at the arbitrary position p, which is an expensive operation in the critical path.

Instead of that, the inventors devised a method of computing/generating a rounding mask, aligning the rounding mask with the mantissa and applying the rounding mask directly on the mantissa such that complex hardware can be eliminated from the critical path. To perform the rounding, the computed mask is directly applied to the output subnormal number (i.e., the number converted to normal number in the EER representation) such that the result is always incremented at a fixed position thereby generating (after truncation) the rounded output number rounded to the correct position. Thus, by using a rounding mask, instead of incrementing and truncating at an arbitrary position (which requires the use of a general-purpose adder), a more efficient and cost effective operation is performed with a much simpler circuit to determine the truncated incremented output. The same rounding mask can be used to determine truncated output number or identify the guard, round and sticky bits.

FIG. 2 is a block diagram illustrating a rounding unit rounding a number (represented in EER representation) using a rounding mask. The number may be a normal number (in the unextended exponent range, or "UER", representation), or a subnormal number (a denormal number in the UER representation which is represented as a normal number in EER representation) produced when performing an arithmetic operation and would comprise a sign bit (s), exponent bits (e) and mantissa bits (m) with an implicit leading 1 before the mantissa bits. As previously discussed, a significand is defined as the value including not only the mantissa (i.e. fractional) bits but also the (implicit) leading bit (which is a 1 for normal numbers and a 0 for denormal numbers) and is denoted n (i.e. n = 1.m for normal numbers and n = 0.m for denormal numbers). This significand is provided as a first input to a rounding logic 202. Further, a rounding mask is generated by mask generator 203, based on the rounding position p, and provided as a second input to the rounding logic 202. The mask may be generated in parallel to performing an arithmetic operation to generate the number to be rounded. The rounding logic 202 performs a bitwise operation between the significand bits n and the rounding mask. In this example the mask is applied directly to the output of the arithmetic operation using the bitwise OR operation. Various other bitwise operation and/ reduction operations producing the same effect on the mantissa m can be performed instead of bitwise OR operation, depending on the rounding mode or format of the mask (as discussed further below).

The generated mask has a bit length equal to at least the bit length of the significand n. The exact position where the strings of ones or zeros starts depends on the type of rounding to be performed. In some cases, the string of ones following a string of zeros may start at a position corresponding to a position p+1 bits from the radix point of the mantissa bits (where the first bit of the mantissa after the radix point is counted as position 1- i.e. a 1-indexed system). In this case, because the mask includes a bit corresponding to the leading 1 of the significand, i.e. the 1 bit before the radix point, the string of ones will begin p+2 bits into the mask. For example, when rounding the output number using a Round Towards Away From Zero (RTA) mode, the rounding mask is generated such that the string of ones starts at a position corresponding to a position p+1 bits from the radix point of the mantissa bits after the radix point. In another case, the string of ones following the string of zeros may start at a position corresponding to a position p+2 bits from the radix point of the mantissa bits. In this case, because the mask includes a bit corresponding to the leading 1 of the significand, i.e. the 1 bit before the radix point, the string of ones will begin p+3 bits into the mask. For example, when a Round to Nearest Even (RNE) rounding method is performed on the output number, the rounding mask is generated such that the string of ones starts at a position corresponding to a position p+2 bits from the radix point of the mantissa bits. This position where the strings of ones starts may vary based on the rounding modes used.

Once the rounding mask is generated, the rounding logic 202 applies the rounding mask directly to the significand n (in other words the mantissa bits m) of the output number by performing a bitwise operation. In an example, a bitwise OR operation is performed. As discussed, the mantissa m is used to refer to fractional part (excluding implicit leading one) of the significand. Using a mask in which a string of 1s begins after the rounding point, the result of performing the bitwise OR between the rounding mask and the mantissa m is that all the bits of the mantissa of the output number after the rounding point from the radix point are set to 1 and all the bits of the mantissa before the truncation point from the radix point are preserved as they are. The output from the rounding logic 202 is provided to the incrementor 204. The incrementor 204 increments the output from the rounding logic 202 by 1 bit at the LSB position such that the carryover from the increment will ripple all the way up to the required point giving the correct rounded number output.

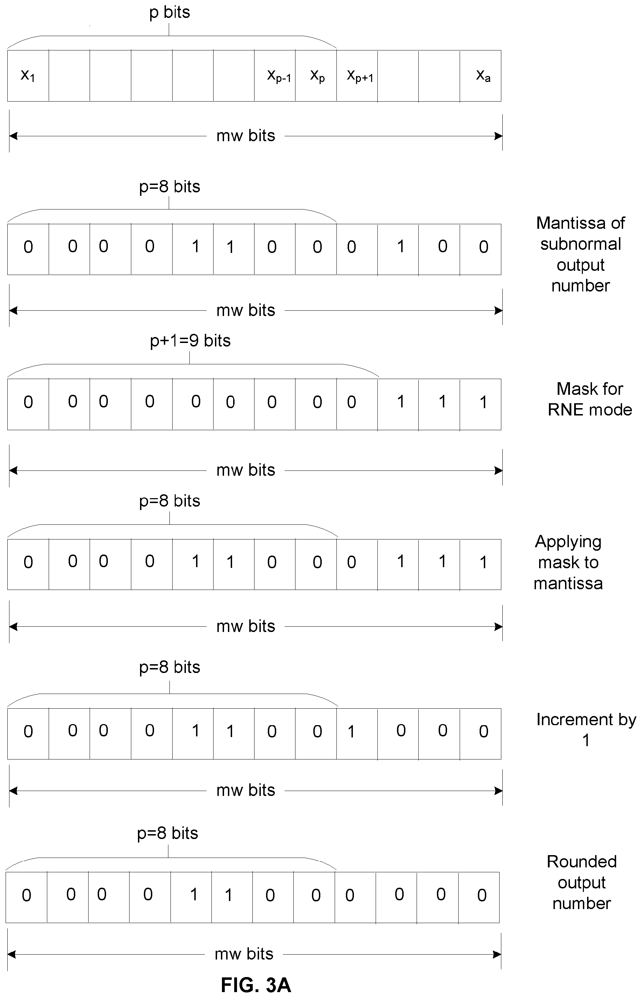

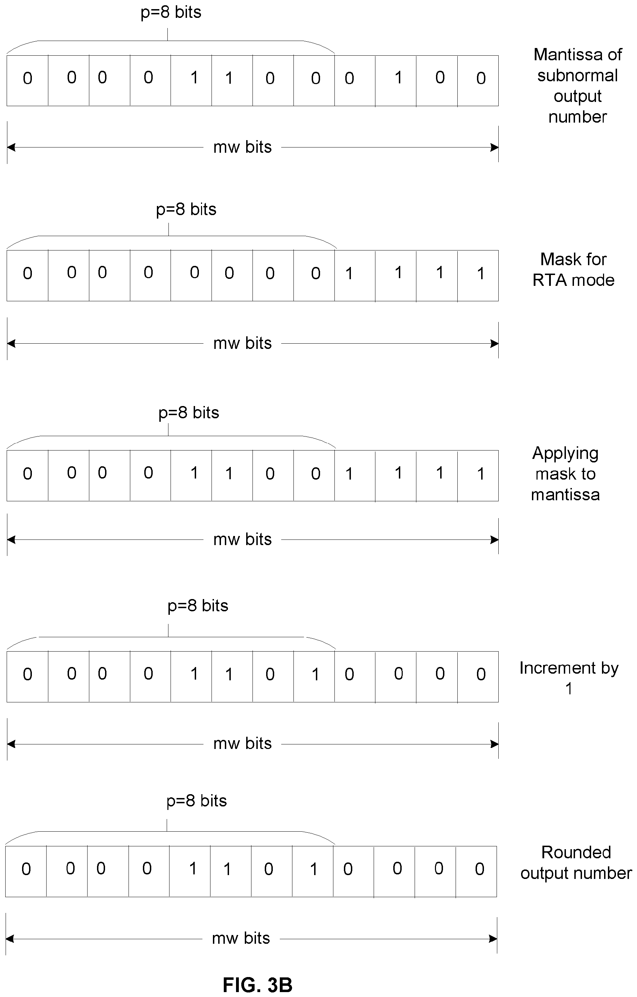

In FIG.3A and 3B, applying a mask to the mantissa bits of a significand is illustrated. In both figures, the significand is rounded to shorten the significand by four places. This is presented in the context of the illustrated significand being a normalised representation in an EER of a value to be represented in an original (UER) format, such that the final four places will not be present in the mantissa in the original format. However, similar considerations apply in the context of simple format conversion (in which the length of significand must be changed).

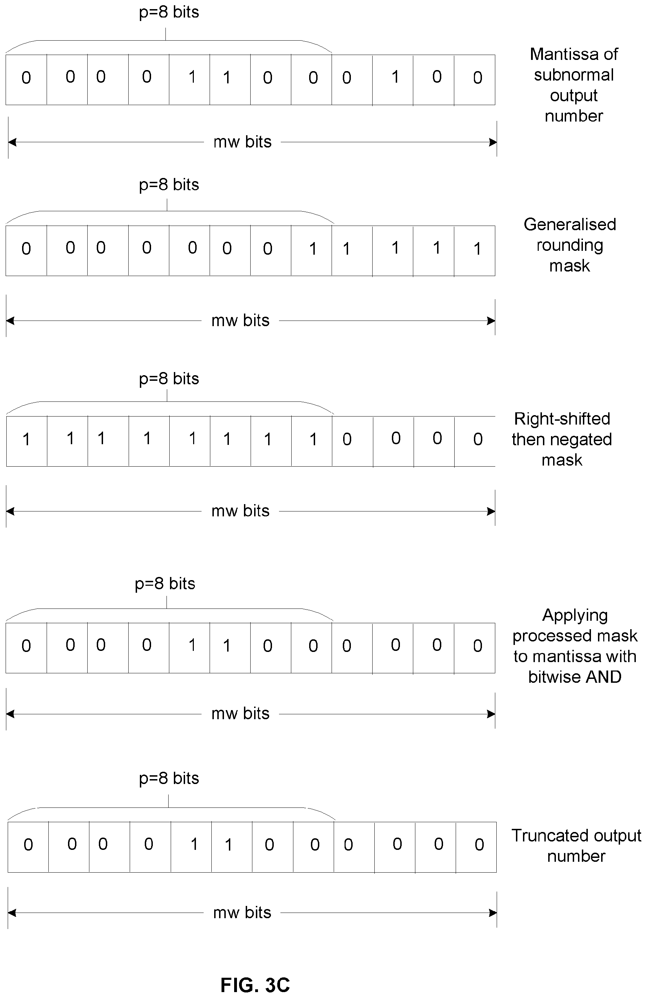

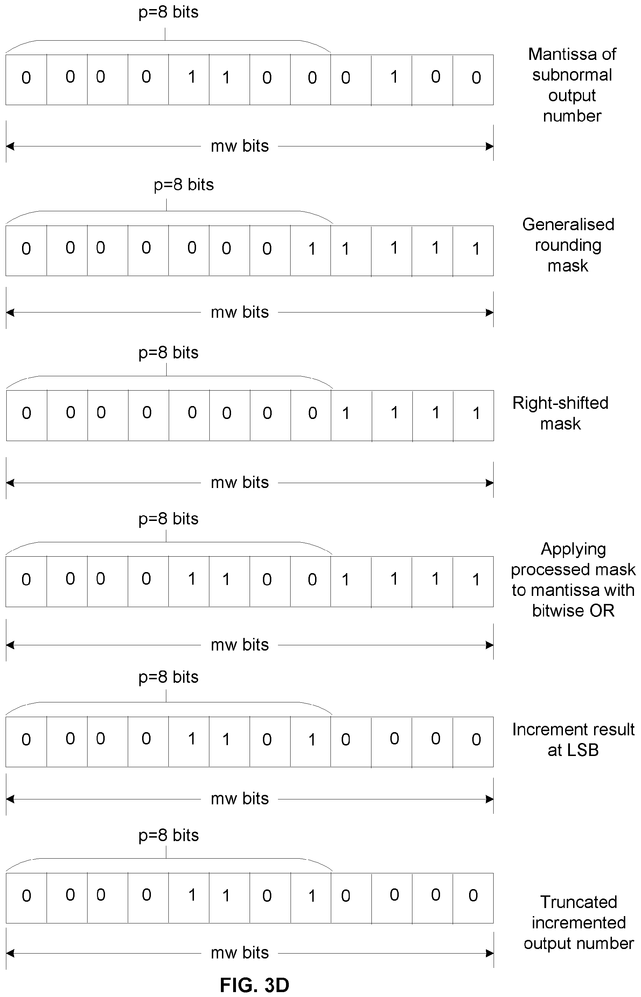

FIG. 3A illustrates an example of rounding an output number using a rounding mask in RNE mode. FIG. 3A illustrates determining a truncated incremented output number using the rounding mask in RNE mode. As mentioned above, FIG. 3A (as well as FIGs 3B, 3C and 3D) only depicts the mantissa bits, for simplicity, although the operation may be performed on the whole significand. Typically, performing bitwise operation between the mantissa bits of the significand and the corresponding bits of the mask provides the correct rounded output and the significand value of the rounded output can be obtained by adding the implicit one to the rounded output. However, when rounding some special case of numbers, i.e. numbers having a value with a leading one of which weight is ½ of the smallest non-zero denormal, the mask needs to be applied to all the bits of the significand n including the leading significand bit as it may still require rounding up (to that value).

Consider the mantissa of the output number having a bit length (mw) of 12 bits is 000011000100. For RNE mode, the rounding mask is generated such that the string of ones starts at a position p+2 bits after the radix point as explained above. As mentioned above, in this example the significand is being shortened by four places, so the rounding position is identified as p=8. Therefore, the string of ones following the string of zeros starts at a position p+2= 10 bits after the radix point. The rounding mask is generated as 000000000111 i.e. zeros in positions 1 to 9 after the radix point and ones in position 10 to 12 after the radix point. In other words, the most significant '1' bit in the mask is one place below the round bit. As explained further below, this will allow a rounding increment to propagate to the round bit as part of the RNE rounding. Now, when the bitwise OR operation is performed by the rounding logic 202, an output 000011000111 is generated by preserving the bits before, and including, the position p+1 as they are in the mantissa and setting all the bits after the position p+1 to 1. The output number is now provided to the incrementor 204 which increments the output number at the LSB position. This generates an output number 000011001000. In other words, in this case, the carryover from the increment ripples all the way up to the point p+1, but does not affect the bit at position p, giving the correct rounded number output when the result is truncated to p bits. That truncation is achieved by setting the bits after the required position to zero, to obtain the output rounded at the correct position in RNE mode as 000011000000. Subsequently, and not shown, the additional zeros below the rounding point may be removed or discarded, e.g. as part of a conversion from the EER format to the UER format. However, if the original value had had a 1 bit at position p+1 (i.e. if the original value had been 000011001100), then result of applying the mask to the mantissa would have been 000011001111, and the increment of the LSB would have resulted in a value of 000011010000. In other words, in that case, the carryover from the increment would have rippled all the way up to the point p, again giving the correct rounded number output 000011010000 when the result is truncated to p bits (in that case, the truncation would not actually change the bit values output, as all the bits after the rounding position are already zero). As such, it can be seen how the use of the mask and a method that increments the LSB every time can give correct results equivalent to the conventional approach of selecting between a truncated number and an incremented (at the rounding position) truncated number based on the rounding mode.

FIG.3B illustrates an example of rounding an output number using a rounding mask in RTA mode (in which any non-zero amount below the rounding point causes the rounding point to be rounded away from zero). FIG.3B illustrates determining truncated incremented output number using the rounding mask in RTA mode. Consider the mantissa of the output number having a bit length (mw) of 12 bits is 000011000100. For RTA mode, the rounding mask is generated such that the strings of ones start at a position p+1 bits after the radix point. Consider the arbitrary position is identified as p=8. Therefore, the string of ones following the string of zeros starts at a position p+1=9 bits after the radix point. The rounding mask is generated as 000000001111. Now, when the bitwise operation is performed by the rounding logic 202, an output 000011001111 is generated by preserving the bits before, and including, position p as they are and setting all the bits after position p to 1. The output number is now provided to the incrementor 204 which increments the output number at the LSB position. This generates an output number 000011010000. The carryover from the increment will ripple all the way up to the required point p giving the correct rounded number output when truncated. That truncation is achieved by setting the bits after the required position to zero, to obtain the output rounded at the correct position in RTA mode as 000011010000 (in this case, the truncation does not actually change the bit values output, as all the bits after the rounding position are already zero). Subsequently, and not shown, the additional zeros below the rounding point may be removed or discarded, e.g. as part of a conversion from the EER format to the UER format. If the original value had had a 1 bit at position p+1 (i.e. if the original value had been 000011001100), then the result of applying the mask to the mantissa would have been 000011001111, and the increment of the LSB would have resulted in a value of 000011010000. In other words, in this rounding mode, the carryover would have rippled to the same position as in the illustrated FIG. 3B giving the same correct (according to the rounding mode) rounded number output 000011010000 when the result is truncated to p bits. Thus in the two different modes RNE and RTA, the position where the string of ones starts in the rounding mask differs producing different results based on the rounding modes.

However, in both of the FIG.3A and FIG.3B examples, despite using masks customised to the particular rounding mode, there are still exceptional values that require more thoughtful handling than can be achieved by the direct application of the mask. In the RNE mode, for values that represent exact ties (i.e. where the round bit is a 1 and the followings LSBs or sticky bit are all zero), the direction of rounding is properly determined by reference to the guard bit (also sometimes termed the 'parity' bit). If that bit is 1 (meaning the value represented to that point is odd), then the value is rounded up (that being the direction of the closest whole even value). If, however, the guard bit is a zero (meaning the value represented to that point is even), then the value is rounded down (that being the direction of the closest whole even value) in a tie situation. The mask described above with respect to FIG. 3A will not always round in the correct direction in these situations. However, the correct rounding result could be obtained by selecting between the conventional 'truncated' and 'truncated incremented' values based on other criteria (in this case the guard bit). Similarly, for RTA, values that are exactly zero below the rounding point should not be rounded up, but the mask described with respect to FIG. 3B will not account for that. In these cases, the values of the guard, round and sticky bits can act as the criteria for making the correct selection between the conventional 'truncated' and 'truncated incremented' values. However, in both cases, these additional criteria can also be derived using a mask, as can both the 'truncated' and 'truncated incremented' values, meaning that it is possible to derive the truncated and truncated incremented values and correctly select between them using the masking approach. This remains more efficient than the conventional approach based entirely on shifters.

Moreover, for a generalised system in which it is desirable for different rounding modes to be dynamically set or selected, correct rounding will depend on the selected mode and the relevant criteria for choosing between the different 'truncated' and 'truncated incremented' outputs. As a result, it has been identified that it is not necessary to use different masks for different rounding modes. Instead, a single mask can be used to derive the 'truncated' and 'truncated incremented' outputs. This mask can be used to exploit the advantage that the increment can be performed at a fixed position (i.e. the LSB) thereby eliminating the need of a large general purpose adder to perform the increment as in a conventional method. Then, the correct rounded value can be selected on the basis of logic operations performed to find the guard, round and sticky bits using the rounding mask (as explained below).

To achieve this generalised approach, a mask can be created to not only be used to perform the truncation and incrementation at the guard bit but also to compute the guard bit itself (as well as the round and sticky bits). To fulfil these different purposes, the mask is initially generated with a different alignment to that shown in the previous examples, with a string of zeros followed by string of ones where the first one is at a position corresponding to p bits after the radix point in the mantissa. The mask can then be shifted as needed (see below) and applied on the significand n (i.e. since the significand includes the mantissa bits, taking the form 1.m or 0.m depending on whether the number is normal or denormal) to obtain the various required outputs. This can be achieved by different logical approaches. According to one approach, the following equations using logical reduction operations and bitwise operations can be used to obtain the various required outputs.

$$\text{Truncated output number, } t = n \ \& \ \sim(\text{mask}>>1) \dots\dots\dots\dots\dots\dots\dots \ (1)$$

$$\text{Truncated incremented output number, } t' = (n \mid (\text{mask}>>1)) + 1 \dots\dots\dots \ (2)$$

$$\text{Guard bit } g = \mid(n \ \& \ (\text{mask} \land (\text{mask}>>1))) \dots\dots\dots\dots\dots\dots\dots\dots \ (3)$$

$$\text{Round bit } r = \mid(n \ \& \ ((\text{mask}>>1) \land (\text{mask}>>2))) \dots\dots\dots\dots\dots\dots\dots \ (4)$$

$$\text{Sticky bit } s = \mid(n \ \& \ (\text{mask}>>2)) \dots\dots\dots\dots\dots\dots\dots\dots\dots\dots \ (5)$$

where & is bitwise AND, | is bitwise OR, ~ is bitwise NOT, >> is right shift, ^ is bitwise XOR, and unary | operator is OR-reduce.

As mentioned above, different logical approaches could be used to obtain the required outputs that can be arrived at using equations (1) - (5) above. For example, the bitwise XOR used in the computation of the guard and round bits is used to turn the monotonic mask, i.e. a string of zeroes followed by a string of ones, into a one-hot mask, i.e. a string of zeroes and ones that only feature one bit set to one. The position of the one in the one-hot mask can be used to read a bit at the corresponding position in the significand, through bitwise AND and OR reduction. The process of deriving a one-hot mask from a monotonic mask can alternatively be implemented using bitwise NOT and bitwise AND through the following equations:

$$\text{Guard bit } g = \mid(n \ \& \ (\text{mask} \ \& \ \sim(\text{mask}>>1))) \dots\dots\dots\dots\dots\dots\dots \ (3')$$

$$\text{Round bit } r = \mid(n \ \& \ ((\text{mask}>>1) \ \& \ \sim(\text{mask}>>2))) \dots\dots\dots\dots\dots\dots \ (4')$$

Replacing an XOR gate by an AND gate and an inverter is functionally equivalent due to the fact that the mask is decreasing, and may be advantageous depending on the electrical and physical characteristics of the technology. However, the particular way in which the required outputs (e.g. the guard bit and round bit) are obtained does not affect how they are subsequently used.

The same rounding mask is used for determining the various required outputs such as the truncated output, the truncated incremented output, the guard bit, the round bit, and the sticky bit. The combination of the various outputs can allow the correct rounded value to be selected based on the rounding mode. Provided below is an example of calculating various outputs by applying the rounding mask to the significand (or mantissa bits).

Consider the number being rounded in FIGs. 3A and 3B. The mantissa bits m of the significand value n of the subnormal output numberto be rounded are 0000 1100 0100. A generalized mask is generated as a string of ones following a string of zeros starting at a position p (which, in this case, is the eighth most significant bit of the mantissa) as explained earlier. The mask is aligned with the mantissa such that the mask equals 0000 0001 1111. That is, the most significant 1 bit of the mask is aligned with the guard bit position (as opposed to being aligned with the round bit in the original FIG.3A example).

FIG.3C illustrates how the truncated output number can be calculated and starts by showing the subnormal output numberto be rounded and the generalised mask as mentioned above. The truncated output number, $t = n$ & $\sim(mask>>1)$ can be calculated according to equation (1). The first step is to calculate the shifted mask:

$$mask>>1 = 000000001111$$

The next step is to perform a NOT operation of the shifted mask. Thus,

$$\sim(mask>>1) = 111111110000$$

The right-shifted and negated mask is also shown in FIG.3C. Further the processed mask is applied to the mantissa bits of the significand by performing a bitwise AND operation. Therefore,

$$n \;\&\; \sim(mask>>1) = 000011000100 \;\&\; 111111110000$$

$$= 000011000000$$

This result is also shown in FIG.3C. Thus use of the generalised mask in this way achieves truncation by setting the bits after the required position to zero (subsequently, and not shown, the additional zeros below the rounding point may be removed or discarded, e.g. as part of a conversion from the EER format to the UER format). Thus, the truncated output, t, is achieved:

$$t = 000011000000$$

FIG.3D illustrates how the truncated incremented output number can be calculated and starts by showing the subnormal output number to be rounded and the generalised mask as for FIG.3C. The truncated incremented output $t' = (n \;|\; (mask>>1)) + 1$ is calculated according to equation (2). Again, the first step is to calculate the shifted mask:

$$mask>>1 = 000000001111$$

Further the shifted mask is applied to the mantissa bits of the significand by performing a bitwise OR operation. Therefore:

$$n \;|\; (mask>>1) = 000011000100 \;|\; 000000001111$$

$$= 0000\ 1100\ 1111$$

This result is shown in FIG.3D. Next the output is incremented:

$$(n \;|\; (mask>>1)) + 1 = 000011010000$$

As explained above, incrementing the LSB after the mask has been suitably applied allows the increment to ripple up to the right position to produce the incremented rounding output. This ripple also has the effect of achieving truncation by setting the bits after the required position to zero (subsequently, and not shown, the additional zeros below the rounding point may be removed or discarded, e.g. as part of a conversion from the EER format to the UER format). Thus, the truncated incremented output, t', is achieved:

$$t' = 000011010000$$

To select between the truncated result and the truncated incremented result, the guard, round and sticky bits can be determined and used to make the selection according to the particular rounding mode being employed.

The guard bit is determined as g = | (n & (mask ^ (mask>>1))) based on equation (3).
The mask shifted right, mask>>1 = 000000001111

The shifted mask is XORed with the original mask,

$$mask \wedge (mask>>1) = 000000011111 \wedge 000000001111$$

$$= 000000010000$$

Further the result is applied to the mantissa bits of the significand by performing a bitwise AND operation. Therefore,

$$n \& (mask \wedge (mask>>1)) = 000011000100 \& 000000010000$$

$$= 000000000000$$

Further, the guard bit is obtained by performing an OR reduce operation

$$g = | (n \& (mask \wedge (mask>>1))) = 0$$

The round bit is determined as r= | (n & ((mask>>1) ^ (mask>>2))) based on equation (4).

The mask shifted right by 2 bits, mask>>2 = 000000000111

The mask shifted right by 1 bit, mask>>1 = 000000001111

The shifted masks are XORed,

$$(mask>>1) \wedge (mask>>2) = 000000001111 \wedge 000000000111$$

$$= 000000001000$$

Further the result is applied to the mantissa bits of the significand by a performing bitwise AND operation. Therefore,

$$(n \& ((mask>>1) \wedge (mask>>2))) = 000011000100 \& 000000001000$$

$$= 000000000000$$

Further, the round bit is obtained by performing an OR reduce operation

$$r = | (n \& ((mask>>1) \wedge (mask>>2))) = 0$$

The sticky bit is determined as | (n & (mask>>2)) based on equation (4).
The mask shifted right, mask>>2 = 000000000111

Further the shifted mask is applied to the mantissa bits of the significand by performing a bitwise AND operation. Therefore,

$$(n \& (mask>>2)) = 000011000100 \& 000000000111$$

$$= 000000000100$$

Further, the sticky bit is obtained by performing an OR reduce operation

$$s = |(n \,\&\, (mask >> 2)) = 1$$

The results of these calculations can be used based on known rules for the particular rounding mode to determine whether the correct rounded value should be returned as t or t'. To explain this, Table 1 provided below illustrates how the guard (g), round (r) and sticky (s) bits of the number relate to the rounding position. Table 2 illustrates the various combination of guard, round and sticky bits and whether they correspond to the correct output being the truncated output (0) or the truncated incremented output (1) for the different rounding modes of: Round Towards Zero (RTZ); Round Towards Away from Zero (RTA); Round To Nearest, Ties Towards Zero (RNZ); Round To Nearest, Ties Towards Away From Zero (RNA); Round To Nearest, Ties To Even (RNE); and Round To Nearest, Ties To Odd (RNO).

Table 1

| Bits before rounding position | | | | | | Bits after rounding position | | | | | |
|---|---|---|---|---|---|---|---|---|---|---|---|
| ? | ? | ? | ? | ? | g | r | s | s | s | s | s |

Table 2

| g | r | s | RTZ | RTA | RNZ | RNA | RNE | RNO |
|---|---|---|-----|-----|-----|-----|-----|-----|
| 0 | 0 | 0 | 0 | 0 | 0 | 0 | 0 | 0 |
| 0 | 0 | 1 | 0 | 1 | 0 | 0 | 0 | 0 |
| 0 | 1 | 0 | 0 | 1 | 0 | 1 | 0 | 1 |
| 0 | 1 | 1 | 0 | 1 | 1 | 1 | 1 | 1 |
| 1 | 0 | 0 | 0 | 0 | 0 | 0 | 0 | 0 |
| 1 | 0 | 1 | 0 | 1 | 0 | 0 | 0 | 0 |
| 1 | 1 | 0 | 0 | 1 | 0 | 1 | 1 | 0 |
| 1 | 1 | 1 | 0 | 1 | 1 | 1 | 1 | 1 |

In the example of the rounding mode being RNE (equivalent to the FIG.3A scenario), and since we have calculated g=0, r=0 and s=1, Table 2 indicates that the truncated result t should be output.

The bitwise operations and/or the reduction operations and increment by 1 operation are much simpler operations than using a general-purpose adder for determining the rounding number. In the new method case, although it is required to round the number at an arbitrary position, the increment is always at the same place (the LSB) using the mask to ripple the increment into the correct position.

As mentioned earlier, the rounding mask can be generated on the fly (based on the required rounding position) in parallel to the arithmetic operation. The rounding mask is cheap to integrate in the critical path. In particular, using the rounding mask uses less area or latency than the rounding methods traditionally used to handle denormal numbers in standard representation. Further, use of rounding masks also creates less latency and uses less area by applying the rounding increment at the same position every time, avoiding the need for a general-purpose adder and shifter for incrementing when the denormal number is represented as normal number in EER representation.

As discussed earlier, the mask can be pre-computed and applied directly to the output of arithmetic operation. Some examples of these arithmetic operation include format conversion or multiplication operations where the position of the leading one is already known or can be found amongst a small number of alternatives. When two normal numbers 'a' and 'b' or a normal number and a denormal number represented as normal number in EER representation are multiplied, the output obtained may be a normal number or a subnormal number in EER, meaning the inputs always have a high bit at the MSB position and hence the output has a leading 1 bit at the MSB position or the second MSB position. Hence to normalize the output, the output is shifted by 1 position or 2 positions to the right. In such cases, the rounding mask can be applied to the result directly, and in a speculative manner when a small number of alternative positions for the leading one exist (e.g. for multiplication, see below). When the rounding mask is applied to normalized output subnormal number/normalized normal number the effect is the same.

It was mentioned above that FIG.3A and FIG.3B (and by extension, FIG.3C and FIG.3D) could be understood in the context of a format conversion, as well as in the context of using an EER to calculate a rounded value in an original (UER) format. The position of the generalized mask can be determined by the output exponent. It is common that the output exponent computation is simpler than the output mantissa, hence the output exponent can be known beforehand. This is the case in float-to-float conversion units and multipliers, and so the rounding approach outlined above is also applicable those scenarios. In such cases the mask can be aligned completely in parallel with the arithmetic operation (if any). The mask alignment involves computing the difference from an exponent to the minimum normal exponent. This difference, when negatively signed indicates the number of bits by which the length of the mantissa needs to be reduced. The final step of the computation involves rounding. The mask is applied before rounding as previously described to compute the truncated, and truncated incremented version of the significand.

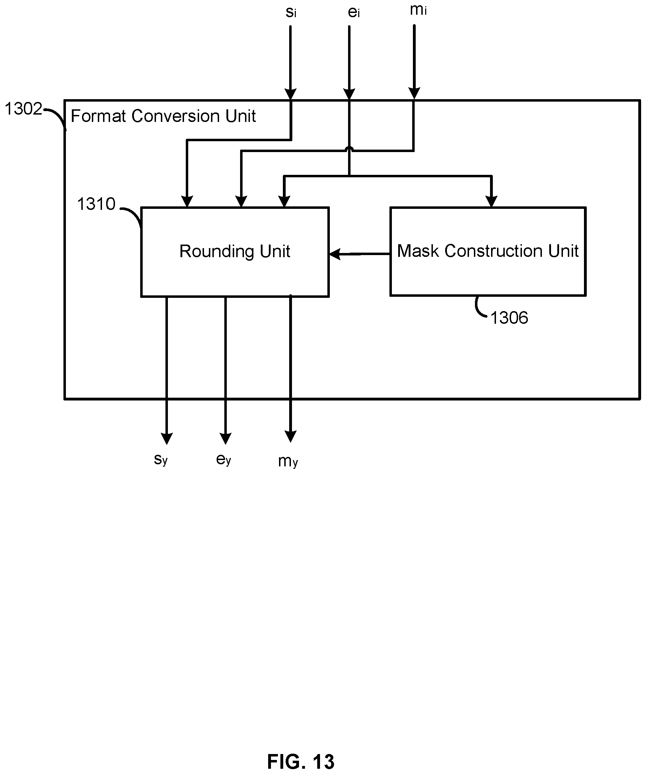

For example, FIG.13 schematically represents a simple format conversion unit 1302 which receives an input number represented in a first format, to be converted to a particular format with a particular mantissa length. The input number comprises a sign bit ($s_i$), exponent bits ($e_i$) and mantissa bits ($m_i$). The format conversion unit 1302 causes a change (e.g. a reduction) in the number of mantissa bits, requiring the output mantissa bits to be appropriately rounded. The mask construction unit 1306 uses the input exponent (as well as the required output exponent, which is assumed to be known for the purposes of FIG. 13) to construct and align the mask, which is then provided to the rounding unit 1310. The rounding unit 1310 uses the input exponent and the mask as previously described to determine the correct rounded mantissa ($m_y$) to output along with the required output exponent ($e_y$) (and output sign bit ($s_y$), based on on the input sign bit).

Further in some arithmetic operations such as for cases that makes use of large normalization, the mask can be calculated on the fly parallelly when performing the arithmetic operation. Some examples of these arithmetic operations include large floating-point addition, where a large number of leading zeroes can appear due to cancellations of significant bits. Given below are two methods/ solutions for calculating rounding mask on the fly while performing such arithmetic operations requiring a large renormalisation.

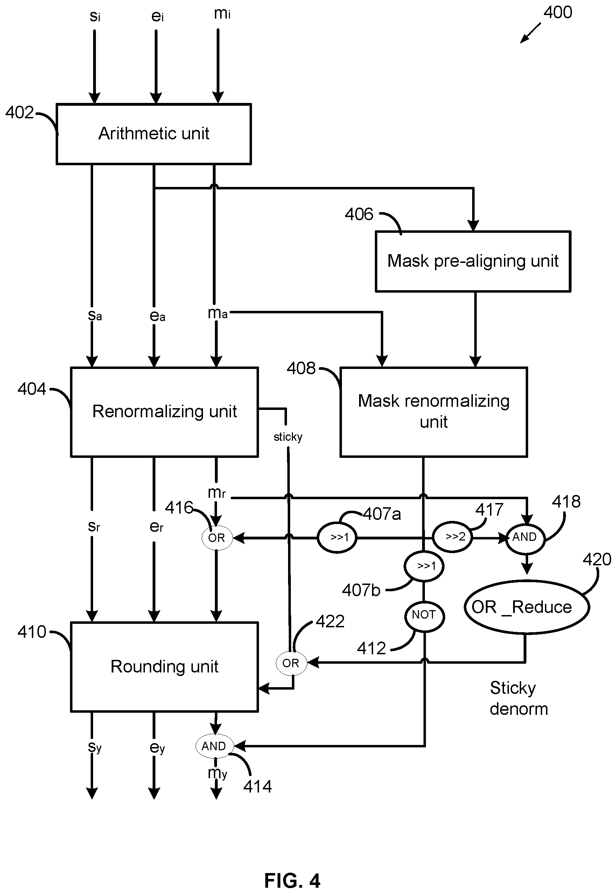

FIG.4 illustrates a block diagram of a first hardware solution for rounding a floating-point number in an EER representation. It is noted again that whilst the specific example is presented in the context of rounding a floating-point number in an EER representation, the skilled person will understand that similar considerations apply in the context of format conversion in which the length of significand must be changed (in particular, it will be appreciated that an input number to a format conversion unit is conceptually similar to the output of the arithmetic unit or the output of the renormalising unit in FIG. 4, depending on whether it is a normal number). In summary, the diagram illustrates how the rounding mask is first aligned to the mantissa pre-normalisation, then during normalisation both the mantissa and the mask are shifted by the same amount, before the mask is then applied. This ensures that, after the pre-alignment step, the position of bits in the mask relative to bits in the mantissa does not change.

The hardware 400 comprises an arithmetic unit 402, a renormalizing unit 404, mask pre-aligning unit 406, mask renormalizing unit 408, and a rounding unit 410. The hardware also comprises fixed bit shifters 407a, 407b and 417, and a plurality of logic operators such as NOT operator 412, AND operator 414, OR operator 416, a second AND operator 418, OR reduce operator 420 and another OR operator 422. FIG. 4 illustrates a first solution where the mask is renormalized in parallel with renormalizing the significand before applying the mask to the renormalized significand.

The arithmetic unit 402 receives a plurality of input numbers which are numbers represented in EER representation. Each input number comprising a sign bit ($s_i$), exponent bits ($e_i$) and mantissa bits ($m_i$). The arithmetic unit performs an arithmetic operation such as floating-point addition, multiplication, or the like. The arithmetic unit 402 performs the arithmetic operation to produce an output number comprising a sign bit ($s_a$), exponent bits ($e_a$) and mantissa bits ($m_a$). Further, the output number is renormalized by the renormalizing unit 404 to obtain a renormalized output number comprising a sign bit ($s_r$), exponent bits ($e_r$) and mantissa bits ($m_r$).

The output number from the arithmetic unit 402 is provided to the renormalizing unit 404. As explained above some arithmetic operations on floating-point numbers produce a large number of leading zeroes due to cancellations of significant bits. The renormalizing unit 404 identifies the leading zero count (lzc) of the mantissa bits ($m_a$). The renormalizing unit 404 shifts the mantissa bits ($m_a$) based on the leading zero count (lzc) of the mantissa bits ($m_a$) to generate the renormalized mantissa bits ($m_r$) thereby normalizing the output number from the arithmetic unit. In other words, the renormalizing unit 404 shifts the mantissa bits ($m_a$) to the left by as many positions as required for its leading 1 to end up in the position of the leading significand bit. This is referred to as the normalized significand n (which is the renormalized mantissa bits with the leading 1 before the radix point i.e.1 .$m_r$).

Further, the mask is computed and pre-aligned using the mask pre-aligning unit 406. The exponent bits ($e_a$) computed by the arithmetic unit are fed as an input to the mask pre-aligning unit 406. The rounding mask is generated as a string of zeros and/or a string of ones. In one example the mask may be a string of zeros followed by the string of ones. In another example the mask may be a string of ones followed by a string of zeros and the logic used to process it (compared to the string of zeros followed by a string of ones) is altered accordingly.

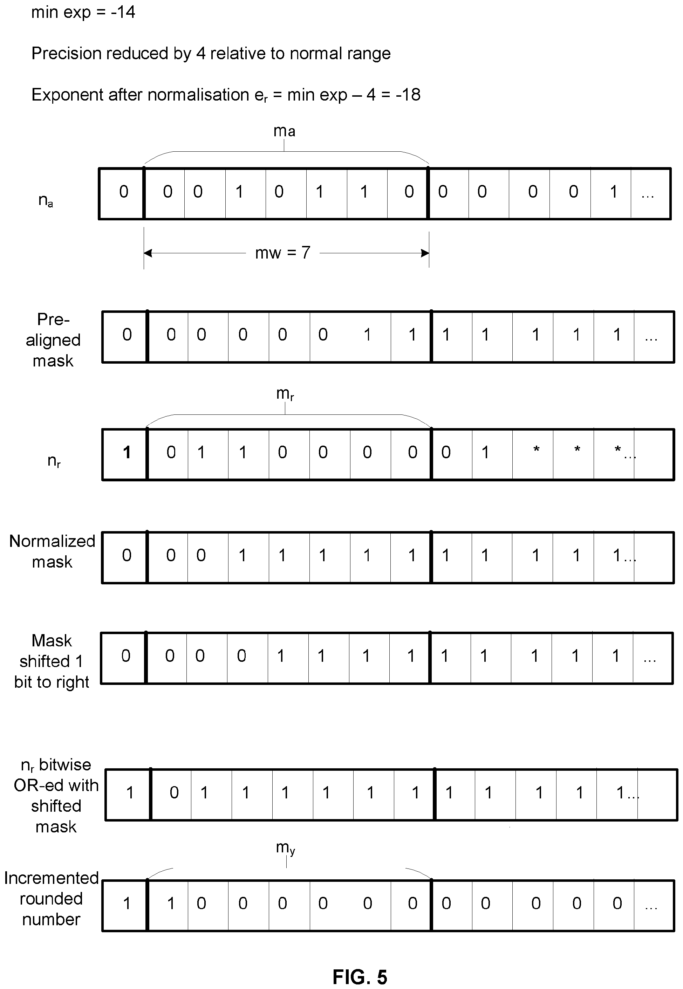

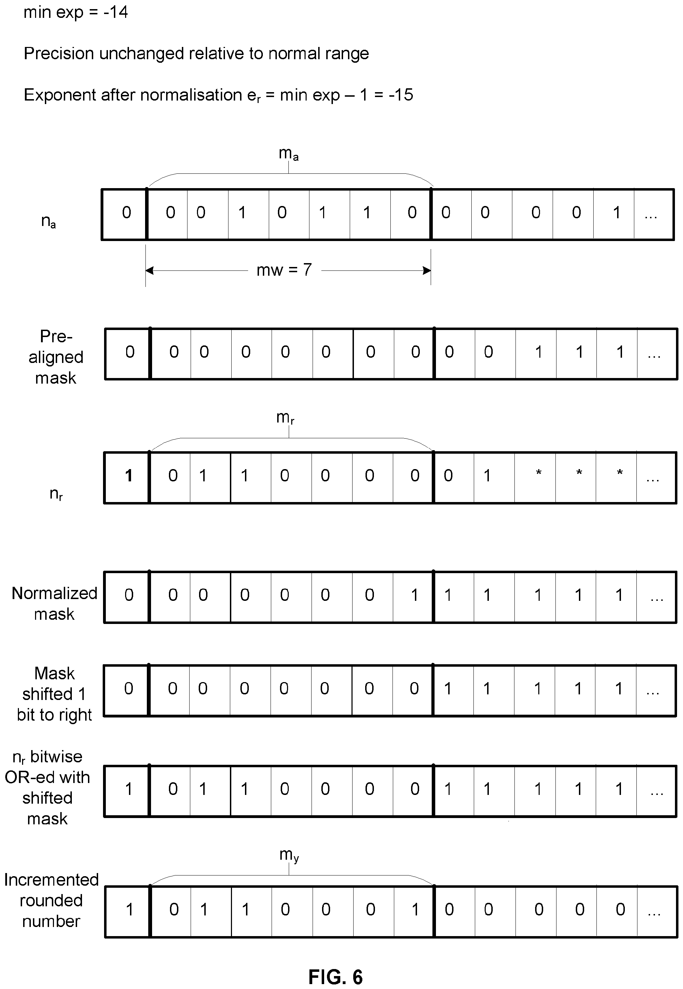

Consider a mask having a string of zeros followed by a string of ones is generated by the mask pre-aligning unit 406. The pre-aligned mask is generated such that the leading one falls at a position of weight $2^{1-bias-mw}$, where 'mw' is the number of mantissa bits in the UER or EER number format, and 'bias' is the exponent bias in the number format. This position corresponds to the guard bit of denormal numbers, or in other words the position of the least significant bit retained after rounding. The mask has a bit length at least equal to the bitlength of the significand. FIG. 5 and FIG.6 shows the significand $n_a$ of an output number from the arithmetic unit and the mask generated based on the exponent bits ($e_a$) of the output number from the arithmetic unit. Note that the computation of $e_a$ typically finishes before the computation of $n_a$,

hence the mask pre-alignment unit can proceed in parallel with the arithmetic unit. Let the minimum normal exponent (min exp) be the minimum exponent that can be used to represent a normal number (as opposed to a subnormal number) in the number format (and represents the value 1 - bias).

In the example of FIG.5, the minimum exponent (min exp) is -14. The required precision for the output is reduced by 4 bits relative to the normal range (i.e. as represented by the full mantissa width mw). This happens when the exponent after normalisation ($e_r$) is such that

$$e_r = min\ exp - 4 = -18$$

However, $e_r$ is not required as an input by the mask pre-aligning unit 406. The mask can be pre-aligned to the output number produced by the arithmetic unit (i.e. before any subsequent normalisation). This can be achieved based on the minimum exponent value calculated from exponent bits ($e_a$) of the number before normalisation and required number of bits of precision. It can be created by shifting to the right a string of ones by

$$ea - min\ exp + mw$$

positions (starting from the leading one being in the position of the leading significand bit), where 'mw' is the number of mantissa bits.

In the example of FIG. 5, $e_a$ is -15, min exp is -14 and mw is 7, so the leading one of the pre-aligned mask is shifted 6 bits to the right (from the the leading significand bit).

In FIG. 6 another example is depicted, in which the minimum exponent (min exp) is again -14, but this time the required precision for the output is unchanged relative to the normal range. This happens when the exponent after normalisation ($e_r$) is such that

$$e_r = min\ exp - 0 = -14$$

However, as described above, the mask can be pre-aligned to the output number produced by the arithmetic unit without $e_r$. Returning to the equation

$$ea - min\ exp + mw$$

that allows us to calculate how far to the right the string of ones in the mask should be shifted, in the example of FIG. 6 ea is -11, and min exp and mw are still -14 and 7 respectively, so the leading one of the pre-aligned mask is shifted 10 bits to the right (starting from the leading one being in the position of the leading significand bit).

Further, the output of the mask pre-aligning unit 406, which is the pre-aligned mask, is provided as an input to the mask renormalizing unit 408. The mask renormalizing unit 408 further receives the mantissa bits ($m_a$) of the output number from the arithmetic unit as another input. The mask renormalizing unit 408 renormalizes the pre-aligned mask based on the leading zero count (lzc) of the mantissa bits ($m_a$) of the output number i.e., the mask renormalizing unit 408 shifts the mask to the left to as many positions as required for normalising the mantissa bits ($m_a$) of the output number with its leading 1 to end up in the leading significand bit position. That is, the mask is shifted to the left by the same number of bit positions as required to generate the normalized significand $n_r$ output by the renormalizing unit 404. In other words, for the avoidance of confusion, the mask renormalising unit does not shift the mask so its own leading one is in the leading significand bit position, but rather it shifts the mask to be in the correct rounding position for use with the renormalized output from the renormalizing unit 404. Therefore, the position $x_p$ of the leading one in the rounding mask depends on both the exponent value (calculated from the exponent before normalisation) and leading zero count of the significand before renormalisation. The pre-normalisation and post-normalisation mask can have the same bit length. When renormalising a mask by performing a left-shift, any bits below the mask leading one (i.e. after leading one) are padded with extra 1s (rather than extra 0s).

The renormalized mask normalized based on the leading zero count is shown in examples in FIG. 5 and FIG. 6.

In FIG. 5, it can be seen that, following renormalisation in renormalizing unit, the normalized significand $n_r$ has been shifted 3 bits to the left compared to $n_a$. Correspondingly, the mask renormalizing unit 408 shifts the pre-aligned mask 3 bits to the left, keeping the mask in the correct position relative to the normalized significand $n_r$. This results in the leading 1 of the mask being positioned at the $3^{rd}$ mantissa bit from the left.

Similarly, in FIG. 6, the normalized significand $n_r$, has been shifted 3 bits to the left compared to $n_a$, and so the pre-aligned mask has also been shifted 3 bits to the left, keeping the mask in the correct position relative to the normalized significand $n_r$. However, in this case, this results in the leading 1 of the mask being positioned at the $7^{th}$ mantissa bit.

As discussed earlier, in the initial consideration of the examples in FIG.3A and FIG.3B, the position where the string of ones starts was decided based on the type of rounding method used. For the RNE method (FIG.3A), the string of ones started at the position $x_{p+2}$ (i.e. two bits after the guard bit). For the RTA method (FIG.3B), the string of 1 starts at the round bit at position $x_{p+1}$. However, as illustrated with FIG.3C and FIG.3D a more generalized mask can be created with a string of zeros followed by string of ones where the first one is at a position $x_p$ corresponding to p bits after the radix point in the mantissa and choose one of the truncated output and the truncated incremented output based on the guard, round and sticky bits. In the generalised approach of FIG. 4, the normalized mask is applied via steps corresponding to equation (1) above, or to obtain the truncated incremented output the mask is applied via steps corresponding to equation (2) above.

Thus, in FIG. 4, in order to determine the truncated output (in accordance with equation (1)), the normalised mask is shifted 1 bit to the right at shifter 407b (which, as a fixed shifter, may simply be implemented with minimal cost in hardware by hardwiring the changes in bit position), then negated by performing a bitwise NOT operation using a NOT operator 412, and the negated mask is then applied on the normalized significand $n_r$ (i.e., $1.m_r$) by performing a bitwise AND operation using the AND operator 414. In other words, the string of zeros followed by a string of ones from the mask renormalizing unit is shifted by one bit to the right and then inverted (i.e. each bit is flipped) and the result is applied to the normalized significand $n_r$ by performing a bitwise AND operation such that non-representable trailing bits of the renormalised significand are pulled to zero thereby generating the truncated output. In this case the OR operator 416 is disabled.

Further in order to determine the truncated incremented output (in accordance with equation (1)), as shown in FIG.5 and FIG. 6, the normalised mask is shifted one bit to the right at shifter 407a (which may the same shifter as shifter 407b, in practice, although they are shown as separate shifters in FIG. 4 for ease of understanding) and then applied to the normalized significand $n_r$ by performing a bitwise OR operation using the OR operator 416 and incremented in the rounding unit 410. When performing the bitwise OR operation of the mask with the normalized significand, the non-representable trailing bits of the renormalised significand $n_r$ (i.e., the bits below the rounding position) are pulled to one. Further the result after performing the bitwise OR operation is increment at the last position and the string of ones in the non-representable trailing bits propagate the increment to the right place flipping all bits below to zero as required thereby generating the truncated incremented output t'. In this case the AND operator 414 is disabled.

In the above calculations, the mask is initially pre-aligned to have the leading one aligned to the guard bit, before later shifting the mask so that the leading one is aligned with the round bit. Equivalently, the mask could be directly generated with the leading one aligned to the round bit. This would avoid the need for a subsequent shift when calculating the truncated output t and the incremented truncated output t'. However, it would introduce the need for left shifting when calculating the guard bit (i.e. 'mask' in equation 3, based upon a mask aligned at the guard bit, would become 'mask <<1' based upon a mask aligned at the round bit), which would introduce non-standard padding with 1's to the right (as opposed to the standard padding by 0's to the left when right-shifting). Nonetheless, it is noted that such equivalent implementations are possible (also for the second solution, as discussed below) and the invention is not limited to the particular embodiments shown.

Finally, the guard, round and sticky bits necessary to select between the truncated output t and the truncated incremented output t' can be derived by OR-reducing the corresponding parts of the significand selected by the rounding mask or a derived one-hot mask, for example using the equations:

$$\text{Guard bit } g = | \ (n \ \& \ (mask \ \hat{} \ (mask >> 1)))\ldots\ldots\ldots\ldots\ldots\ldots\ldots\ldots\ldots..\ldots(3)$$

$$\text{Round bit } r = | \ (n \ \& \ ((mask >> 1) \ \hat{} \ (mask >> 2)))\ldots\ldots\ldots\ldots\ldots....\ (4)$$

$$\text{Sticky bit } s = | \ (n \ \& \ (mask >> 2))\ldots\ldots\ldots\ldots\ldots\ldots\ldots\ldots\ldots\ldots\ (5)$$

FIG. 4 also illustrates the calculation of sticky bit as described by equation (5). The sticky bit is calculated by performing the shift by two bits to the right at shifter 417 (which, as a fixed shifter, may simply be implemented with minimal cost in hardware by hardwiring the changes in bit position) and then the logical operations by the logical gates such as a second AND operator 418, OR reduce operator 420 and another OR operator 422. The OR operator 422 reduces low significance bit discarded post normalisation in OR operator 420 and lower significance bits discarded before or during normalisation in unit 402. The AND operator 418 receives the mask from the mask renormalizing unit 408 and the renormalized mantissa from the renormalizing unit 404. The mask shifted to the right by two positions and the result is applied to the normalized significand by performing a bitwise AND operation using the AND operator 418 and then OR reducing the result using the OR reduce operator 420 to identify the sticky bit. The sticky bit is high if and only if at least one bit after the round bit is high.

Further, a sticky bit is obtained from the renormalizing unit 404 post renormalization (i.e. unneeded LSBs post-renormalisation are accumulated into a sticky bit by the renormalizing unit). For example, for a mantissa having bit length of 5 bits, the renormalizing unit 404 would renormalize an input 000101011110011 into 101011 and output sticky bit s= 1. Similarly, the renormalizing unit 404 would renormalize input 000101010000000 and output 10101 and sticky bit s= 0. The final sticky bit would then consist of the fixed sticky part associated to the normalized mantissa $m_r$, combined at the OR operator 422 with any further sticky bit associated with the denormal mantissa post renormalization in case the output entered that range. These further bits informing the final sticky bit can be found between the end of the normalized mantissa $m_r$ and the denormal rounding position (excluding round bit).

FIG. 4 does not illustrate the calculation of the guard and round bits, in order to keep the diagram as clear as possible. However, the circuitry would be similar to that shown for calculating the sticky bit (also requiring a combination of OR reduction and an AND operator, but further requiring an additional XOR operation applied to differently shifted copies of the mask. In particular as described by above equation (3) the mask (from the mask renormalizing unit 408) is XOR-ed with a copy of the mask shifted to right by one position to produce a result with a 1 bit after the rounding position p (i.e. at the position of the guard bit g), and 0 bits elsewhere. Further, this result is applied to the normalized significand by performing a bitwise AND operation using a AND operator and then OR reducing the result using a OR reduce operator to generate the guard bit. In other words, these operations effectively use the mask to select the guard bit from the normalized significand. Similarly, as described by above equation (4) the mask (from the mask renormalizing unit 408) is shifted to the right by one position and is XOR-ed with a copy of the mask shifted to right by two positions, to produce a 1 bit at p+2 position from the radix point (i.e. at the position of the round bit r) and pull down the remaining bits to zero. Further, this result is applied to the normalized significand by performing a bitwise AND operation using the AND operator and then OR reducing the result using the OR reduce operator to generate the round bit.

Once we have determined the g, r and s bits, in accordance with the above equations, the rounding unit 410 choses one of the truncated output t or the truncated incremented output t' as the rounded output number. The rounded output number is a number of required precision in EER representation comprising a sign bit ($s_y$), an exponent bits ($e_y$) and mantissa bits ($m_y$).

Thus, by using this method there is minimal overhead cost in rounding a number in EER representation as the rounding increment ripples to appropriate position, rather than incrementing at specific position of the significand using a full adder. Also, time is saved as the mask and normalized significand can be computed in parallel. Further the same mask can be used to select the appropriate bits (g, r and s bits) at a fixed position.

However, using a large mask re-normalizer incurs area overhead. The inventors devised a further different solution of rounding a number in EER representation by avoiding the use of a large renormalizing unit for performing mask renormalization. The solution includes applying the pre-aligned mask to the result obtained after the arithmetic operation directly. Thus, in this solution, the mask is pre-aligned in parallel while performing the arithmetic operation as explained above with respect to FIG. 4. The pre-aligned mask is applied to the output/result obtained after the arithmetic operation.

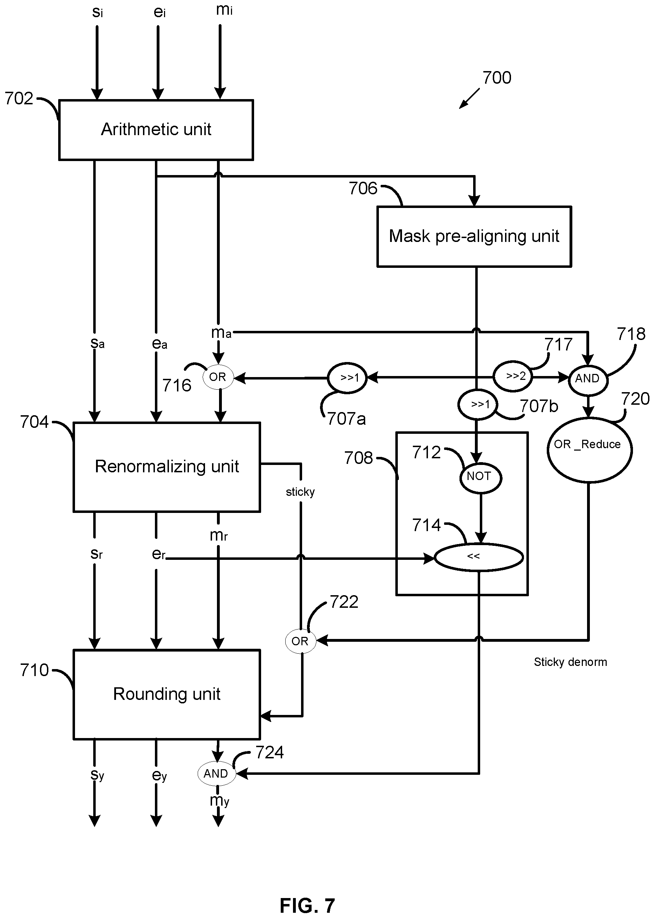

FIG. 7 illustrates another block diagram of a rounding system for rounding a number in EER representation. FIG. 7 illustrates the second solution where the pre-aligned mask is applied to the output/result obtained after the arithmetic operation directly when calculating the incremented truncated result. The hardware 700 in FIG. 7 comprises an arithmetic unit 702, a renormalizing unit 704, mask pre-aligning unit 706, rounding unit 710. The hardware also comprises fixed bit shifters 707a, 707b, 717 a plurality of logic operators such as NOT operator 712, (variable) shifter 714, AND operator 724, OR operator 716, a second AND operator 718, an OR reduce operator 720, OR operator 722.

The arithmetic unit 702 receives a plurality of input numbers which are numbers represented in EER representation. Each input number comprise a sign bit ($s_i$), exponent bits ($e_i$) and mantissa bits (m). The arithmetic unit 702 performs an arithmetic operation such as multiplication, division and the like. The arithmetic unit 702 performs the arithmetic operation to produce an output number comprising a sign bit ($s_a$), exponent bits ($e_a$) and mantissa bits ($m_a$). Further, the output number is normalized by the renormalizing unit 704 to obtain a normalized output number comprising a sign bit ($s_r$), exponent bits ($e_r$) and mantissa bits ($m_r$).

Further, in parallel to performing the arithmetic operation using arithmetic unit 702, the mask is computed and pre-aligned using the mask pre-aligning unit 706. The exponent bits before normalisation ($e_a$) of the input number are fed as an input to the mask pre-aligning unit 706. The rounding mask is constructed based on the exponent value before normalisation. The mask is generated as a string of zeros and string of ones.

In the second solution, the mask is pre-aligned by the mask pre-alignment unit 706 in the same way as for the first solution. That is, the pre-aligned mask is generated such that the leading one falls at a position of weight $2^{1-bias-mw}$, where 'mw' is the number of mantissa bits in the UER or EER number format, and 'bias' is the exponent bias in the number format..

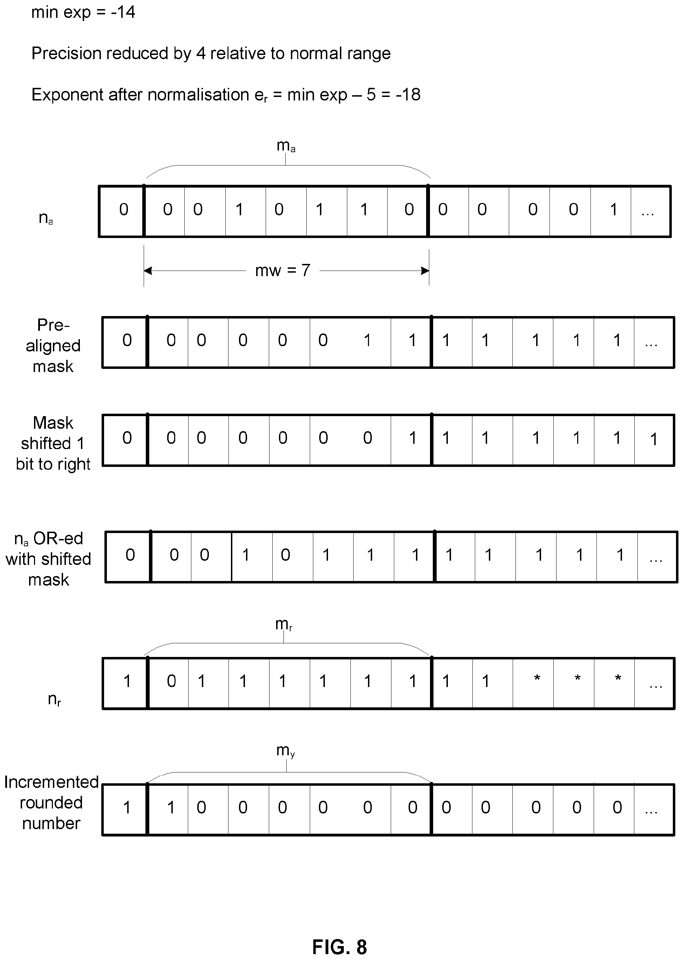

FIG. 8 shows an example of rounding an output number using a rounding mask using the second solution. FIG. 8 shows (as part of the significand $n_a$) the mantissa bits ($m_a$) of an output number from the arithmetic unit and the pre-aligned mask generated based on the exponent ($e_a$) before normalisation of the floating-point number.

In the example of FIG. 8, the minimum exponent (min exp) is -14. The required precision for the output number is reduced by 4 bits relative to the precision of the normal range (i.e. as represented by the full mantissa width mw). This is explained by

$$e_r = \text{min exp} - 4 = -18$$

However, as in FIG. 4, the solution of FIG.7 does not require $e_r$ to create the mask. The initially generated mask can be created by shifting to the right a string of ones by

$$ea - min\ exp + mw$$

positions (starting from the leading one being in the position of the leading significand bit), where mw is the number of mantissa bits. In the example of FIG. 8, ea is -15, and min exp and mw are -14 and 7 respectively, so the leading one of the pre-aligned mask is shifted 6 bits to the right (from the left hand side of the mask). Thus, the mask is pre-aligned to the output number produced by the arithmetic unit using the mask pre-aligning unit 706 based on the exponent before normalisation (ea) of the input number and number format precision.

To calculate the truncated incremented output t' to the required precision, in the second solution, the pre-aligned mask is shifted to the right and then applied into the array of the floating-point number (i.e. before normalisation), as explained in more detail below. The method implements the logic for calculating the truncated incremented output t' based on equation (2) given above.

The second solution determines the truncated incremented option by performing a bitwise OR of the mantissa obtained after performing the arithmetic operation and the right-shifted mask, prior to normalising the obtained result. Thus, to determine the truncated and incremented output, the pre-aligned mask is right-shifted by one position at shifter 707a (which, as a fixed shifter, may simply be implemented with minimal cost in hardware by hardwiring the changes in bit position) and then is applied to the significand bits ($n_a$) by performing an OR operation using the OR operator 716, this is fed to the renormalizing unit 704 and the subsequent output from the renormalizing unit 704 is incremented by 1 in the rounding unit 710.

By performing the OR- operation of the shifted mask with the mantissa bits ($m_a$) output from the arithmetic unit 702, the non-representable trailing bits of the mantissa bits ($m_a$) (i.e. the bits below the rounding position) are pulled to one as shown in FIG. 8.

The renormalizing unit 704 identifies the leading zero count (lzc) of the mantissa bits ($m_a$) after performing the reduction OR operation. The renormalizing unit 704 shifts the OR-ed mantissa bits ($m_a$) based on the leading zero count (lzc) of the mantissa bits ($m_a$) to generate the renormalized mantissa bits ($m_r$) thereby normalizing the output number from the arithmetic unit. In other words, the renormalizing unit 704 shifts the OR-ed mantissa bits ($m_a$) to the left to as many positions as required for its leading 1 to end up in the leading significand bit position of the significand $n_r$. This is referred to as the normalized significand $1.m_r$ also shown in FIG.8.

Further, the normalized significand $n_r$ is incremented at the last position and the string of ones in the non-representable trailing bits propagate the increment to the right place flipping all bits below to zero as required, thereby generating the truncated incremented output t' as shown in FIG. 8 (N.B. as discussed above, and not shown in FIG. 8, the additional zeros below the rounding point may be removed or discarded subsequently, e.g. as part of a conversion from the EER format to the UER format).

Though the calculation of the truncated incremented output t' is straightforward, calculating the truncated option i.e., the non-incremented truncated version of the significand, by setting the appropriate number of trailing bits to zero does not work in the same way when the pre-aligned mask is applied to the mantissa bits output by the arithmetic unit ($m_a$) directly. The method for determining the truncated output t is explained below. Again, this method follows the logical procedure for calculating the truncated output t based on the equation (1) given above.

In the method illustrated by FIG. 7, in order to determine the truncated output, the pre-aligned mask is right-shifted by one bit and negated by performing a bitwise NOT operation, using a NOT operator and the negated mask is applied on the significand $n_a$ (i.e., $0.m_a$ for a denormal number) by performing a bitwise AND operation using the AND operator. In other words, the string of zeros followed by a string of ones in the mask is right shifted and then inverted (i.e. each bit is flipped) and the result is applied to the normalized significand n by performing a bitwise AND operation such that non-representable trailing bits of the renormalised significand are pulled to zero thereby generating the truncated output. This is not illustrated in FIG. 7 to keep the figure simple.

For rounding modes requiring the incremented truncated output t', the second solution works. However, the calculation of the truncated output t needs the normalized mask to be applied on the renormalized mantissa bit. FIG. 7 illustrates normalizing the mask using a simpler circuit 708 compared to a large mask renormalizing circuit 408 shown in FIG. 4. The circuit 708 is smaller than the equivalent 408, however it requires the exponent $e_r$ to be known, which makes the computation of the shifted mask slower. To compensate for this, in the second solution, the normalized mask is applied after the rounding increment. This allows the second solution to potentially achieve the same latency as solution one. However, better interleaving of the mask application with the normalisation and the rounding results in relaxed timing constraints and reduced circuit area. This is explained in detail below.

The inventors devised that the extra time for calculating the increment by the rounding unit for the truncated incremented output t' can be utilized to calculate the truncated output t thereby hiding the latency. Thus the pre-aligned mask from the mask pre-aligning unit 706 is shifted by one bit and provided to the circuit 708 to normalize the mask before applying the mask to the normalized mantissa.

Thus, in order to calculate the truncated output t (or non-incremented option) the pre-aligned mask is shifted one bit to the right by shifter 707b (which may the same shifter as shifter 707a, in practice, although they are shown as separate shifters in FIG. 7 for ease of understanding) and then negated using a NOT operator 712 and shifted based on the leading zero count and using a shifter 714 which produces a mask equivalent to (although differently aligned to) the renormalised mask output from the mask renormalizing unit 408 in FIG. 4, following the negation by the NOT operator 412, without using a large mask normalizing unit. That is, the main difference between solutions one and two is that, in solution two, the mask application is split between OR-ing before the normalisation and AND-ing after the normalisation. AND-ing the mantissa that has been previously OR-ed removes trailing ones in the case where the increment wasn't needed, so the selection between truncated output and truncated-incremented output can remain in the rounding unit. In this way, more latency is provided to the mask alignment, compensating for the fact that it requires the exponent $e_r$ to be known. The normalized mask (i.e. the output of circuit 708) is further applied on the mantissa $m_r$ (by performing a bitwise AND operation) using AND operator 724. Thus, instead of using a large renormalizing unit the normalizer 708 implemented using the NOT operator 712 and the shifter 714 is small in size but slow compared to the mask renormalizing 408. However, implementing the renormalizer in this manner takes advantage of the time available for performing the increment operation hiding latency in calculating the truncated output t.

Since the shifter 714 and incrementors in the rounding unit 704 have comparable delay and the normalized mask may be obtained slightly earlier than the renormalised significand, hence the bitwise operations needed to adjust the non-incremented rounded output can be done in time and with less area based on equation (1) above.

Thus, to determine the truncated output, the pre-aligned mask is shifted one bit to the right at shifter 707b and negated using a NOT operator 712 and shifted using the shifter 714 to obtain the normalized mask. Further the normalized mask is applied on the normalized significand n (i.e., $1.m_r$) by performing a bitwise AND operation using the AND operator 724. In other words, the string of zeros followed by string of ones of the pre-aligned mask are shifted by one bit to the right and are then flipped and applied to the renormalized significand n by performing a bitwise AND operation such that non-representable trailing bits of the renormalised significand are pulled to zero thereby generating the truncated output. In this case the OR operator 716 is disabled.

Finally, the guard, round and sticky bits necessary to select between the truncated output t and the truncated incremented output t' can be derived by OR-reducing the corresponding parts of significand selected by the rounding mask or a derived one-hot mask.

FIG. 7 also illustrates the calculation of sticky bit as described by equation (5). The sticky bit is calculated by performing the logical operations by the logical gates such as a second AND operator 718, OR reduce operator 720 and another OR operator 722 The AND operator 718 receives the pre-aligned mask from the mask pre-aligning unit 706 and the mantissa from the arithmetic unit 702. Thus, as described by the above equation (5) mask shifted to right by two positions. Further, the mask is applied to the mantissa by performing a bitwise AND operation using the AND operator 718 and then OR reducing the result using the OR reduce operator 720 to identify the sticky bit.

FIG. 7 does not illustrate the calculation of the guard and round bits, in order to keep the diagram as clear as possible. However, the circuitry would be similar to that shown for calculating the sticky bit (also requiring a combination of OR reduction and an AND operator, but further requiring an additional XOR operation applied to differently shifted copies of the mask). In particular, as described by above equation (3), the pre-aligned mask is XOR-ed with the pre-aligned mask shifted to right by one position to produce a 1 bit after the rounding position p, and that result is applied to the mantissa from the arithmetic unit by performing a bitwise AND operation using an AND operator, and then the result is OR reduced using a OR reduce operator to generate the guard bit. Further as described by above equation (4), the pre-aligned mask is shifted to right by one position is XOR-ed with the pre-aligned mask shifted to right by two positions to produce a 1 bit at p+2 position from the radix point and to pull down the remaining bits to zero, and that result is applied to the mantissa by performing a bitwise AND operation using the AND operator 718 and then that result is OR reduced using the OR reduce operator 720 to generate the round bit.

Once we know the g, r and s bits based on the above equations (3), (4) and (5), the rounding unit 710 choses one of the truncated output t or the truncated incremented output t' as the rounded output number. The rounded output number is a number of required precision in EER representation comprising a sign bit ($s_y$), exponent bits ($e_y$) and mantissa bits ($m_y$).

Thus, solutions described above are particularly suited for rounding output produced while performing arithmetic operations where large normalization is required such as operations that contain at least one floating-point addition. An example situation in which first and second solutions might be employed is following an FMA (fused multiply add).

As mentioned above, the specific examples of FIG. 4 and FIG. 7 are presented in the context of rounding a floating-point number in an EER representation, but similar considerations apply in the context of format conversion in which the length of significand must be changed. The simple format conversion unit illustrated in FIG. 13 does not show the detail of FIGs 4 and 7, but the skilled person will understand how the logic of FIGS 4 and 7 could be applied in the context of FIG. 13. In particular, it is noted that whilst FIG 13 shows a single output from mask construction unit 1306 to rounding unit 1310, in practice that output (i.e. the mask) might be applied at different times (e.g. before or after renormalisation, if required) and there would be other paths, not shown in FIG. 13, for calculating the guard, round and sticky bits. The construction of the mask may also involve pre-aligning the mask based on the exponent bits ($e_i$) of the input number, in a similar fashion to the pre-alignment in FIGs. 4 and 7 (described in the scenario of renormalisation as being based on the exponent bits of the output of the arithmetic unit), with the subsequent shifting, normalisation and application to the input number being rounded being implemented depending on the solution implemented.

The inventors devised a further, third, solution of rounding a number in EER representation by avoiding the use of a large renormalizing unit where iterative arithmetic operations produce a normalized or nearly normalized result. The solution includes pre-aligning a mask during each iterative step of the arithmetic operation. Thus, in this solution, the mask is pre-aligned in parallel while performing the iterative arithmetic operation. The pre-aligned mask is applied to the output/result obtained after performing each iterative step of the arithmetic operation directly. This is suited to hardware performing iterative digit-by-digit computation, such as units for calculating divisions or square roots.

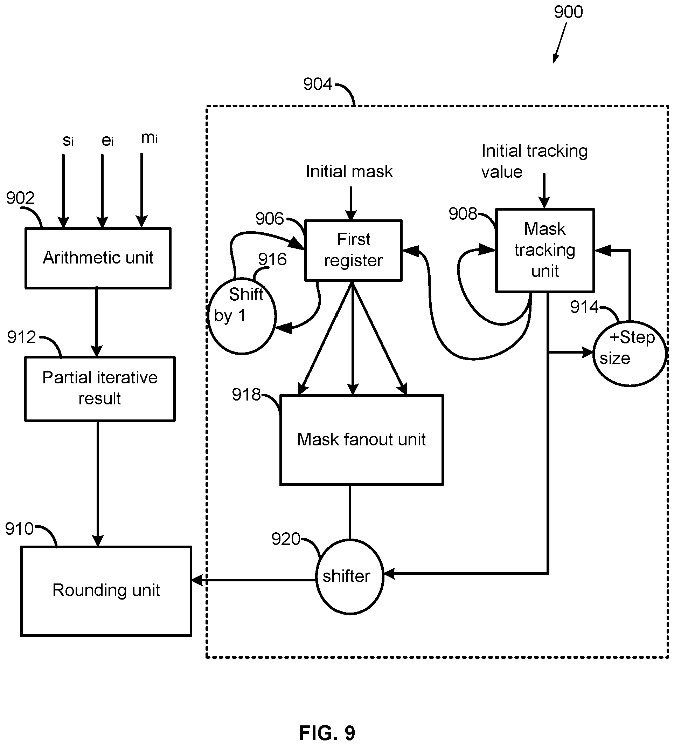

FIG. 9 illustrates yet another block diagram of a rounding system for rounding a number in EER representation, according to the third solution. FIG. 9 illustrates the third solution where the pre-aligned mask is applied to the output/result obtained after each step of an iterative arithmetic operation directly. The hardware 900 in FIG. 9 comprises an arithmetic unit 902, mask constructing unit 904, a storage 912 for storing partial iterative result, and a rounding unit 910. The mask constructing unit 904 comprises a first register 906, a mask tracking unit 908, an incrementor 914, a first shifter 916, mask fanout unit 918, and a second shifter 920.

The arithmetic unit 902 receives a plurality of input numbers which are numbers represented in EER representation. Each number among the plurality of input numbers could be a normal number or a subnormal number. Each input number comprise a sign bit ($s_i$), exponent bits ($e_i$) and mantissa bits (m). The arithmetic unit 902 performs an iterative arithmetic operation such as division or, more generally, calculating a power or a product of powers of the input(s), i.e., an operation without or with very little renormalisation. The arithmetic unit 902 performs the iterative arithmetic operation to produce a partial iterative output number comprising mantissa bits ($m_p$).

For such iterative operations the exponent of the output number ($e_a$) can be pre-determined/derived. For example, when performing division operation, the exponent of the output number ($e_a$) (i.e., the unbiased floating-point exponent of a quotient) is either the difference or the difference-1 of the exponents of dividend and divisor. Thus, the renormalisation on the calculated fixed-point significand is reduced to a 1-bit shifter. Similarly, in a different example, such as performing a floating-point square-root operation, the square root exponent is determined independently of the significand. Thus, while performing iterative arithmetic operation, there is no or very small need of performing normalization of the significand as the operation produces normalized or nearly normalized output number.

Therefore, there is also no need to perform normalization of the rounding mask prior to applying the mask to the partial output number. Instead, the construction of the rounding mask is reduced to the pre-aligning step. Thus, in parallel to performing the iterative arithmetic operation using arithmetic unit 902, the rounding mask is computed and pre-aligned using the mask constructing unit 904. The initial mask is generated as a string of zeros followed by a string of ones as described in the previous solutions with respect to FIG. 4 and FIG. 7. In another example the initial mask is generated as a string of ones followed by a string of zeros.

The mask constructing unit 904 is implemented without the need of a large pre-aligning shifter unlike in the first solution and second solution described above. The mask constructing unit 904 uses two registers instead of the pre-aligning shifter for constructing/ pre-aligning the mask. This is because a register can implement shifting by optionally updating the value stored in it with its own bit shifted by a fixed amount. Thus using registers for pre-aligning the mask saves area compared to using a large pre-alignment shifter, as the pre-alignment shifter could still be very expensive relative to the rest of the required hardware. The pre-alignment shifter could be very expensive, particularly if the hardware for the significand calculation is comparatively very small or if the available slack for a single shift operation is very short or if the output precision, which determines the maximal shift width, is large, such as double precision.

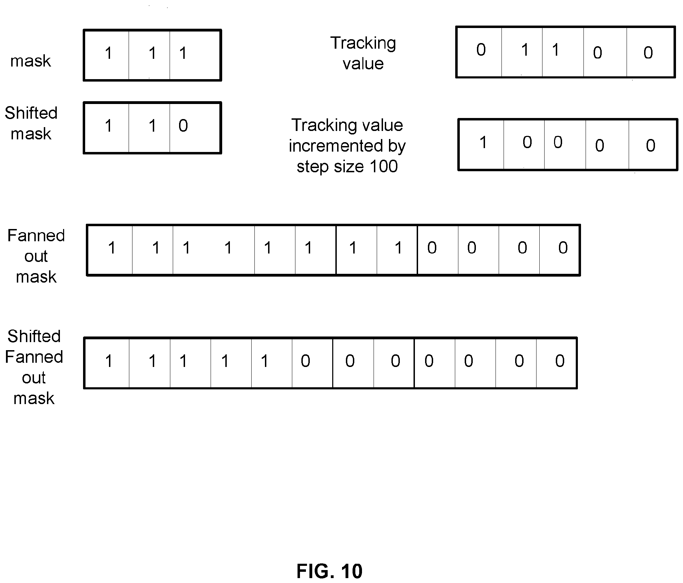

A first register 906 is configured to store the mask being constructed. The initial rounding mask could be predetermined and could be either a string of zeros or a string of ones. The mask stored in the first register 906 is determined based on the mantissa bit length of the input mantissa $m_i$ and step size. Step size (in other words radix) is the number of bits of the actual output number calculated in each step of iterative operation. The step size could be for example 1, 2, 3 or 4 bits of the significand of the calculated in each step. The step size can be chosen by the designer. The initial rounding mask is the number of bits of the input mantissa $m_i$ divided by the step size r. For example, consider an example as shown in FIG. 10 where the mantissa bit length of the input mantissa $m_i$ is 12 bits and step size is r=4. The initial rounding mask is therefore a 3 bit number for example a string of all high bits or ones (i.e., 111). The initial mask can be predetermined and input to the first register when performing the iterative arithmetic operations.

The initial rounding mask in the first register 906 is shifted with a constant 1 bit position to the left based on a tracking value (which is explained later). When a rounding mask of string of ones followed by zeros is generated the initial mask which is a string of ones is just shifted to the left. When a rounding mask of string of zeros followed by ones is generated, the initial mask which is a string of zeros is shifted to the left and appended by ones on the LSB bits. Thus, initially the predetermined rounding mask is stored back in the first register 906 and is updated in each step of the iterative arithmetic operation. The number of times the mask stored in the first register 906 is to be shifted is determined by another register known as mask tracking unit 908.

The mask tracking unit 908 is configured to store a tracking value. The initial tracking value can also be pre-determined based on the output exponent ($e_y$) and the step size 'r' and stored in a different memory location. This is possible because for iterative arithmetic operations the output exponent ($e_y$) and the step size can be derived without the need of calculating the significand value or the mantissa bits of the actual output number ($m_y$). An example equation for calculating the tracking value is

$$\text{Tracking value} = ((\exp+2) \% (2^5)) + \text{cycle\_count}*\text{step size}$$

Where exp is the value of minimum exponent min exp, and the cycle count is the number of iterations since the start of the operation. For example, if we were computing a long division one bit at a time then cycle count would be the bit which is currently computed.

Thus, the tracking value is input to the mask tracking unit before performing the iterative arithmetic operation. The bit length of the tracking value comprises a number of bits for representing mantissa bits generated in each iteration and an overflow bit. Therefore, the tracking value comprises an overflow bit, one or more accumulation bits and one or more remainder bits (which is called the mask tracking offset or tracker initialisation offset). For example, in FIG.10, the tracking value comprises a 5 bit number (i.e., one overflow bit and 4 bits representing the new mantissa bits generated or the step size). Consider the 5 bit tracking value comprise 1 overflow bit, 2 accumulation bits and 2 remainder bits equal to 01100. The number of remainder bits in this case is the step size-2. In some other cases, the remainder bits may be the step size -1.

The tracking value in the mask tracking unit 908 is incremented by the step size until the overflow bits turns high or one. Thus, in the example in FIG.10 the tracking value is incremented by the step size 4 (represented as 100 in binary) thereby turning the overflow bits turns high or one in the first cycle. The rounding mask is stored in the first register 906 is updated based on the tracking value in the mask tracking unit 908. The rounding mask in the first register 906 is shifted to the left every time the tracking value in the mask tracking unit 908 is incremented. Further when the tracking value overflows, and the mask tracking unit 908 indicates to the first register 906 to stop shifting the rounding mask. In the example in FIG. 10, the rounding mask is shifted to the left by one bit position and shifting is stopped as the overflow bit turns high. The rounding mask is padded with a zero bit at the LSB position when shifted to the right by one bit position thereby generating the rounding mask as 110.

The shifted mask is further provided to a mask fanout unit 918 where the rounding mask is further updated by fanning out the bits of the shifted mask registered in the first register 906 by a factor of step size to be aligned with the mantissa bits of the significand of the actual output number $m_a$. The mask fanout unit 918 performs fanning out the bits of the rounding mask from the first register 906 by padding each bit of the rounding mask with the same bit based on the step size in order to align the rounding mask with the mantissa bits of the significand. Thus in FIG. 10 every bit of the rounding mask from the first register is padded with same bit or replicated 4 times to generate a fanned out mask 1111 1111 0000.

The fanned out mask is further provided to a second shifter 920. The second shifter is comparatively a smaller shifter compared to the mask pre-aligning unit used in the other two solutions explained with respect to FIG. 4 and FIG. 7. The fanned out mask from the mask fanout unit is further updated by shifting the fanned out mask by a fixed amount based on LSB bits of the tracking value to generate the rounding mask. The fixed amount by which the shifting is performed is identified based on the tracker initialisation offset (i.e. the remainder bits). The number of LSB bits considered as remainder bits representing the tracker initialisation offset is determined based on the step size. In FIG.10 the tracker initialisation offset is step size-2 =2. The tracker initialisation offset of the tracking value 01100 after incrementing the step size (giving a tracking value 10000) is therefore 00.

The tracker initialisation offset indicate the fixed amount of shifting as indicated below.

00 - <<3
01 - <<2
10- <<1
11 - <<0

The tracker initialisation offset 00 (despite adding step size until the overflow bit turns high) indicates that the real exponent after shifting by multiple of step size would still be 3 below the normal range, so the fanned out mask needs to be shifted further by 3 bits if remainder bits are zeros. The tracker initialisation offset 11 after adding step size until the overflow bit turns high (assuming all accumulate bits are low) is the smallest normal exponent i.e. no further shifting of the fanned out mask is required.

In FIG. 10, the rounding mask is further shifted to the right by 3 bits using the second shifter 920. The rounding mask thus generated is applied on the mantissa bits $m_a$ of the partial output generated in each step to round the actual output number to the correct position. The updated rounding mask is applied to the partial output number by performing bitwise operation between the updated rounding mask and the partial output number. Further the same equations (1)-(5) can be used to apply the mask to the partial output number. More preferably in this case, a mask is generated as a string of ones followed by a string of zeros.

The guard, round and sticky bits are derived based on the actual output number and the rounding mask. Further the selection between truncated output number or a truncated incremented output number is performed based on the derived guard, round and sticky bits. The mask and bitwise operations are used to calculate the truncated output number by setting any non-representable trailing bits (i.e. bits in the EER that are not representable in the UER) of the output number to zero, and to calculate the truncated incremented output number by incrementing the output number at the first representable position in the unextended exponent range (i.e. the position of the LSB in the unextended exponent range) and setting any less significant bits (i.e. any bits of the input mantissa at a less significant position than the position of the LSB in the unextended exponent range) to zero.

Thus, the three different architectures are implemented such that there is no requirement of a general purpose adder for adding the increment at the correct position.

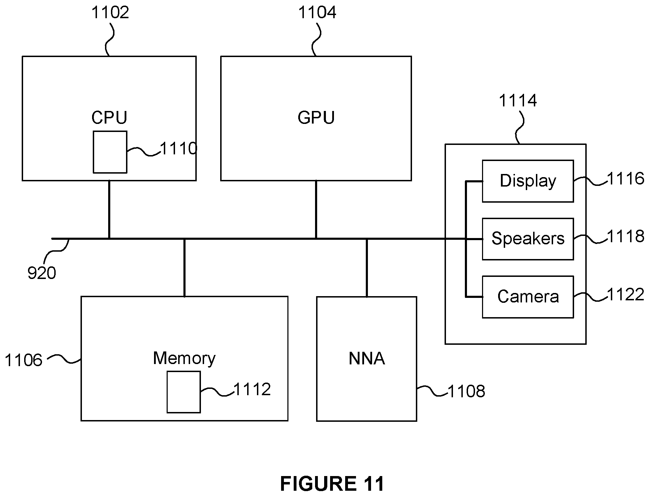

Figure 11 shows a computer system in which processing systems described herein may be implemented. The computer system comprises a CPU 1102, a GPU 1104, a memory 1106, a neural network accelerator (NNA) 1108 and other devices 1114, such as a display 1116, speakers 1118 and a camera 1122. A processing block 1110 (corresponding to hardware 400, 700 or 900 or format conversion unit 1302) is implemented on the CPU 1102. In other examples, one or more of the depicted components may be omitted from the system, and/or the processing block 1110 may be implemented on the GPU 1104 or within the NNA 1108. The components of the computer system can communicate with each other via a communications bus 1120. A store 1112 is implemented as part of the memory 1106.

The hardware 400, 700 and 900 for rounding a number in EER representation of Figures 4, 7 and 9 are shown as comprising a number of functional blocks. This is schematic only and is not intended to define a strict division between different logic elements of such entities. Each functional block may be provided in any suitable manner. It is to be understood that intermediate values described herein as being formed by a hardware 400, 700 and 900 need not be physically generated by the hardware 400, 700 and 900 at any point and may merely represent logical values which conveniently describe the processing performed by the hardware 400, 700 and 900between its input and output.

The hardware 400, 700 and 900 described herein may be embodied in hardware on an integrated circuit. The hardware 400, 700 and 900 described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a hardware 400, 700 and 900 configured to perform any of the methods described herein, or to manufacture a hardware 400, 700 and 900 comprising any apparatus described herein. An integrated circuit definition dataset may be, for example, an integrated circuit description.

Therefore, there may be provided a method of manufacturing, at an integrated circuit manufacturing system, a hardware 400, 700 and 900 as described herein. Furthermore, there may be provided an integrated circuit definition dataset that, when processed in an integrated circuit manufacturing system, causes the method of manufacturing a hardware 400, 700 and 900 to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

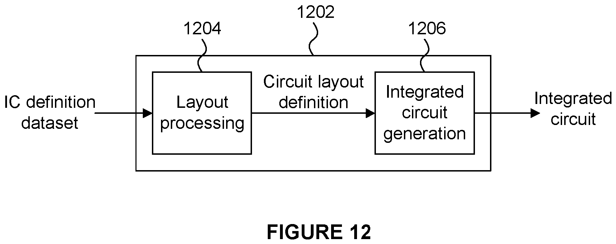

An example of processing an integrated circuit definition dataset at an integrated circuit manufacturing system so as to configure the system to manufacture a hardware 400, 700 and 900 will now be described with respect to Figure 12.

Figure 12 shows an example of an integrated circuit (IC) manufacturing system 1002 which is configured to manufacture a hardware 400, 700 and 900 as described in any of the examples herein. In particular, the IC manufacturing system 1202 comprises a layout processing system 1204 and an integrated circuit generation system 1206. The IC manufacturing system 1202 is configured to receive an IC definition dataset (e.g. defining a hardware 400, 700 and 900 as described in any of the examples herein), process the IC definition dataset, and generate an IC according to the IC definition dataset (e.g. which embodies a hardware 400, 700 and 900 as described in any of the examples herein). The processing of the IC definition dataset configures the IC manufacturing system 1202 to manufacture an integrated circuit embodying a hardware 400, 700 and 900 as described in any of the examples herein.

The layout processing system 1204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1204 has determined the circuit layout it may output a circuit layout definition to the IC generation system 1206. A circuit layout definition may be, for example, a circuit layout description.

The IC generation system 1206 generates an IC according to the circuit layout definition, as is known in the art. For example, the IC generation system 1206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1206 may be in the form of computer-readable code which the IC generation system 1206 can use to form a suitable mask for use in generating an IC.

The different processes performed by the IC manufacturing system 1202 may be implemented all in one location, e.g., by one party. Alternatively, the IC manufacturing system 1202 may be a distributed system such that some of the processes may be performed at different locations and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a hardware 400, 700 and 900 without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 12 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 12, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

ANNEX

Some numbered statements are provided below:

A1. A method of rounding a floating-point number represented in an Unextended Exponent Range, herein "UER", representation when represented in an Extended Exponent Range, herein "EER", representation, the method comprising:

receiving, at an arithmetic unit, a plurality of input numbers in the EER representation, each input number comprising a sign bit ($s_i$), exponent bits ($e_i$) and mantissa bits ($m_i$);

performing an iterative arithmetic operation to produce a partial output number of an actual output number in the EER representation comprising a sign bit ($s_a$), exponent bits ($e_a$) and mantissa bits ($m_a$);

storing a tracking value in a mask tracking unit;

updating a rounding mask in a first register based on the tracking value in the mask tracking unit; and

applying the updated rounding mask to each partial output number in each step to round the actual output number to correct position as if rounding in the UER representation.

A2. The method of statement A1, wherein each number among the plurality of input numbers is one of a normal number or a denormal number in EER representation.

A3. The method of any preceding statements, wherein applying the updated rounding mask to the partial output number comprises performing bitwise operation between the updated rounding mask and the partial output number.

A4. The method of any preceding statements, wherein the rounding mask stored in the first register is determined based on the mantissa bit length and the step size.

A5. The method of any preceding statements, wherein the rounding mask is a string of zeros and ones.

A6. The method of any preceding statements, wherein updating the rounding mask comprises:

deriving a predetermined tracking value from a memory to the mask tracking unit, wherein the tracking value is predetermined based on the exponent bits ($e_i$) of the input numbers and step size ;

incrementing the tracking value in the mask tracking unit by the step size; and

shifting the bits of the compressed rounding mask in the first register to the left by one bit position every time the tracking value in the mask tracking unit is incremented.

A7. The method of statement A6, wherein updating the rounding mask further comprises indicating to the first register to stop shifting the compressed rounding mask when the tracking value overflows.

A8. The method of statements A6 and A7, wherein updating the rounding mask further comprises fanning out the bits of the shifted rounding mask registered in the first register by a factor of step size to be aligned with the mantissa bits of the significand.

A9. The method of statement A8, wherein fanning out the bits of the rounding mask in the first register is performed by padding the bits of the rounding mask to either side to align the rounding mask with the mantissa bits of the significand.

A10. The method of statements A6 to A9, wherein updating the rounding mask further comprises of shifting the fanned out rounding mask by a fixed amount based on a mask tracking offset of the tracking value.

A11. The method of statement A10, wherein the mask tracking offset of the tracking value is determined based on the step size.

A12. The method of statement A1, wherein the method further comprises deriving guard round and sticky bits based on the mantissa bits of the actual output number and the rounding mask.

A13. The method of statement A1, wherein the method further comprises determining and selecting a truncated output number by truncating the mantissa bits of the output number or a truncated incremented output number by incrementing the mantissa bits of the output number and truncating the mantissa bits of the output number.

A14. The method of statements A12 and A13, wherein the selection is based on the derived guard, round and sticky bits.

A15. The method of statement A13, wherein determining truncated output number is performed by setting the non-representable trailing bits mantissa bits of the output number to zero.

A16. The method of statement A13, wherein determining truncated incremented output number is performed by incrementing the mantissa bits at the first representable position and setting all the below trailing bits to zero.

A17. A hardware implementation for rounding a floating-point number represented in an Unextended Exponent Range, herein "UER", representation when represented in an Extended Exponent Range, herein "EER", representation n, the hardware implementation comprising:

arithmetic unit configured to:

receiving, at an arithmetic unit, a plurality of input numbers in the EER representation, each input number comprising a sign bit ($s_i$), exponent bits ($e_i$) and mantissa bits ($m_i$); and
performing an iterative arithmetic operation to produce a partial output number of an actual output number in the EER representation comprising a sign bit ($s_a$), exponent bits ($e_a$) and mantissa bits ($m_a$);

mask constructing unit comprising:

a first register configured to store rounding mask;
a mask tracking unit configured to store a tracking value;
wherein the mask constructing unit is configured to update the rounding mask based on the tracking value in the mask tracking unit; and

rounding unit configured to apply the rounding mask to each partial output number in each step to round the actual output number to correct position as if rounding in the UER representation.

A18. The hardware implementation of statement A17, wherein the rounding unit applies the updated rounding mask to the partial output number by performing a bitwise operation between the updated rounding mask and the partial output number.

A19. The hardware implementation of statements A17 or A18, wherein the first register stores the rounding mask pre-determined based on the mantissa bit length and the step size.

A20. The hardware implementation of statements A17-A19, wherein mask construction unit updates the rounding mask comprises the steps of:

deriving a predetermined tracking value from a memory to the mask tracking unit, wherein the tracking value is predetermined based on the exponent bits (ei) of the input numbers and step size ;

incrementing the tracking value in the mask tracking unit by the step size; and

shifting the bits of the compressed rounding mask in the first register to the left by one bit position every time the tracking value in the mask tracking unit is incremented.

A21. The hardware implementation of statement A20, wherein the mask construction unit updates the rounding mask by further indicating to the first register to stop shifting the compressed rounding mask when the tracking value overflows.

A22. The hardware implementation of statement A21, wherein the mask construction unit further comprises a mask fanout unit configured to update the rounding mask by fanning out the bits of the shifted rounding mask registered in the first register by a factor of step size to be aligned with the mantissa bits of the significand.

A23. The hardware implementation of statement A22, wherein the mask fanout unit performs fanning out the bits of the rounding mask in the first register is performed by padding the bits of the rounding mask to either side to align the rounding mask with the mantissa bits of the significand.

A24. The hardware implementation of statements A20-A23, wherein the mask construction unit further comprises a shifter configured to updating the rounding mask by shifting the fanned out rounding mask by a fixed amount based on mask tracking offset of the tracking value.

A25. Computer readable code configured to cause the method of any of the statements A1 to A16 to be performed when the code is run.

A26. A computer readable storage medium having encoded thereon the computer readable code of the statement A25.

B1. A method of converting the format of a floating-point number, the method comprising:

receiving an input floating-point number in a first floating-point format, the input floating-point number comprising a sign bit ($s_i$), exponent bits ($e_i$) and mantissa bits ($m_i$);

constructing a rounding mask based on the exponent bits ($e_i$) of the input number; and

applying the rounding mask to the input floating-point number to round the input floating-point number for correct representation in a second floating-point format.

B2. The method of statement B1, wherein rounding mask is a string of zeros and ones.

B3. The method of any preceding statements, wherein rounding mask comprises a leading 1 at the position of the weight $2^{(1-bias-mw)}$.

B4. The method of any preceding statements, wherein the method further comprises deriving guard, round and sticky bits based on the mantissa bits (m) of the input floating-point number and the rounding mask.

B5. The method of statement B4, wherein applying the rounding mask to the input floating-point number to round the input floating-point number for correct representation in a second floating-point format further comprises determining and selecting either a truncated output number by truncating the mantissa bits (m) of the input floating-point number or a truncated incremented output number with an incremented least significant bit compared to the truncated output number.

B6. The method of statement B5, wherein the selection is based on the derived guard, round and sticky bits.

B7. The method of statements B5 or claim B6, wherein the mantissa bits (m) of the input floating-point number comprise trailing bits that are non-representable in the second floating-point format, and determining the truncated output number comprises applying the mask to the mantissa bits ($m_i$) of the input floating-point number to set the non-representable trailing bits to zero.

B8. The method of any of statements B5 to B7, wherein the mantissa bits (m) of the input floating-point number comprise a bit that is at the least significant representable position in the second floating-point format, and wherein determining the truncated incremented output number comprises applying the mask to the mantissa bits (m) of the input floating-point number to increment the bit that is at the least significant representable position in the second floating-point format and to set any less significant bits to zero.

B9. The method of any preceding statements, wherein constructing the rounding mask comprises pre-aligning the rounding mask based on the exponent bits ($e_i$) of the input number.

B10. The method of any preceding statements, wherein applying the rounding mask to the input floating-point number to round the input floating-point number for correct representation in a second floating-point format comprises:

generating normalized mantissa bits in the second floating-point format based on the input floating-point number; a step of normalizing the rounding masked based on a bit shift required to normalize the input floating-point number in the second floating-point format; and

applying the normalized rounding mask to the normalized mantissa bits in the second floating-point format.

B11. A hardware implementation for converting the format of a floating-point number, the hardware implementation comprising:

an input configured to an input floating-point number in a first floating-point format, the input floating-point number comprising a sign bit ($s_i$), exponent bits ($e_i$) and mantissa bits ($m_i$);

a mask alignment unit configured to construct a rounding mask based on the exponent bits ($e_i$) of the input numbers; and

a rounding unit configured to apply the rounding mask to the input floating-point number to round the input floating-point number for correct representation in a second floating-point format.

B12. The hardware implementation of statement B11, wherein the mask constructing unit is configured to construct the rounding mask by pre-aligning the rounding mask based on the exponent bits ($e_i$) of the input numbers.

B13. The hardware implementation of statement B12, wherein the mask constructing unit is further configured to perform a step of normalizing the mask by shifting the rounding mask to the based on a bit shift required to normalize the input floating-point number in the second floating-point format.

B14. The hardware implementation of statement B13, wherein the rounding unit is configured to generate normalized mantissa bits in the second floating-point format based on the input floating-point number.

B15. The hardware implementation of statement B14, wherein the rounding unit is configured apply the normalized rounding mask to the normalized mantissa bits in the second floating-point format.

B16. Computer readable code configured to cause the method of any of the statements B1 to B10 to be performed when the code is run.

B17. A computer readable storage medium having encoded thereon the computer readable code of statement B16.

**Claims**

1.  A method of rounding a floating-point number in an Extended Exponent Range, herein "EER", that would be a denormal floating-point number represented in an Unextended Exponent Range, herein "UER", the method comprising:

    receiving, at an arithmetic unit, a plurality of input numbers in the EER representation, each input number comprising a sign bit ($s_i$), exponent bits ($e_i$) and mantissa bits ($m_i$);

    performing an arithmetic operation to produce an output number in the EER representation comprising a sign bit ($s_a$), an exponent bits ($e_a$) and mantissa bits ($m_a$);

    constructing a rounding mask based on the exponent bits ($e_a$) computed by the arithmetic operation; and

    applying the rounding mask to the output number in the EER representation to round the output number to correct position as if rounding in the UER representation.

2.  The method as claimed in claim 1, wherein each number among the plurality of input numbers is one of a normal number or a denormal number in EER representation.

3.  The method as claimed in claim 1 or 2, wherein the output number is one of a normal number or a denormal number in EER representation.

4.  The method as claimed in any preceding claims, wherein the rounding mask is a string of zeros and ones.

5.  The method as claimed in any preceding claims, wherein constructing the rounding mask comprises pre-aligning the rounding mask, pre-aligning comprising:

    pre-aligning with a leading 1 at the position of the weight $2^{(1-bias-mw)}$, where mw is the number of mantissa bits and bias is the exponent bias in the UER representation; or

    pre-aligning the rounding mask based on the exponent computed by the arithmetic operation ($e_a$).

6.  The method as claimed in claim 5, wherein constructing the predetermined rounding mask further comprises a step of normalizing the rounding mask by shifting the rounding mask to the left by the same number of bits required to normalize the output number.

7. The method as claimed in claim 6, wherein the method further comprises generating normalized mantissa bits ($m_r$) of the output number.

8. The method as claimed in claim 7, wherein applying the rounding mask comprises performing a bitwise OR operation between the normalized rounding mask and normalized mantissa bits ($m_r$) of the output number,
and the method optionally further comprises determining and selecting a truncated output number by truncating the normalized mantissa bits ($m_r$) of the output number or a truncated incremented output number by incrementing the normalized mantissa bits ($m_r$) of the output number and truncating the normalized mantissa bits ($m_r$) of the output number.

9. The method as claimed in claim 7, wherein the method further comprises deriving guard round and sticky bits based on the normalized mantissa bits ($m_r$) of the output number and the rounding mask.

10. The method as claimed in claim 8, wherein the selection is based on the derived guard, round and sticky bits.

11. The method as claimed in claim 8, wherein

   determining the truncated output number comprises setting the non-representable trailing bits of the normalized mantissa bits ($m_r$) of the output number to zero; or
   determining the truncated incremented output number comprises incrementing the normalized mantissa bits ($m_r$) at the first representable position and setting all the below trailing bits to zero.

12. A hardware implementation for rounding a floating-point number in an Extended Exponent Range, herein "EER", that would be a denormal floating-point number represented in an Unextended Exponent Range, herein "UER", the hardware implementation comprising:

   arithmetic unit configured to:

   receive a plurality of input numbers in the EER representation, each input number comprising a sign bit ($s_i$), exponent bits ($e_i$) and mantissa bits ($m_i$); and
   perform an arithmetic operation to produce an output number in the EER representation comprising a sign bit ($s_a$), an exponent bits ($e_a$) and mantissa bits ($m_a$);

   mask constructing unit configured to construct a rounding mask based on the exponent bits ($e_a$) computed by the arithmetic operation; and
   rounding unit configured to apply the rounding mask to the output number in the EER representation to round the output number to correct position as if rounding in the UER representation.

13. The hardware implementation as claimed in claim 12, wherein the mask constructing unit is configured to construct the rounding mask by pre-aligning the rounding mask based on the exponent bits ($e_a$) computed by the arithmetic operation.

14. The hardware implementation as claimed in claims 12 or 13, wherein the mask constructing unit is further configured to construct the rounding mask by performing a step of normalizing the rounding mask by shifting the rounding mask to the left by the same number of bits required to normalize the output number, and
optionally the hardware implementation further comprises a renormalizing unit configured to generate normalized mantissa bits (mr) of the output number, and further optionally wherein the rounding unit is configured apply the rounding mask by performing a bitwise OR operation between the normalized rounding mask and normalized mantissa bits (mr) of the output number.

15. Computer readable code configured to cause the method of any of claims 1 to 14 to be performed when the code is run.

100

n         1         p

102

| Shifter |

104

| General Purpose Adder |

106

| Truncator |

**FIG. 1**

200

n         p

203

| Mask Generator |

202

| Rounding Logic (Bitwise OR) |

204

| Incrementor |

**FIG. 2**

p bits

| $x_1$ | | | | | | $x_{p-1}$ | $x_p$ | $x_{p+1}$ | | | $x_a$ |
|---|---|---|---|---|---|---|---|---|---|---|---|

← mw bits →

p=8 bits

| 0 | 0 | 0 | 0 | 1 | 1 | 0 | 0 | 0 | 1 | 0 | 0 |
|---|---|---|---|---|---|---|---|---|---|---|---|

← mw bits →

Mantissa of subnormal output number

p+1=9 bits

| 0 | 0 | 0 | 0 | 0 | 0 | 0 | 0 | 0 | 1 | 1 | 1 |
|---|---|---|---|---|---|---|---|---|---|---|---|

← mw bits →

Mask for RNE mode

p=8 bits

| 0 | 0 | 0 | 0 | 1 | 1 | 0 | 0 | 0 | 1 | 1 | 1 |
|---|---|---|---|---|---|---|---|---|---|---|---|

← mw bits →

Applying mask to mantissa

p=8 bits

| 0 | 0 | 0 | 0 | 1 | 1 | 0 | 0 | 1 | 0 | 0 | 0 |
|---|---|---|---|---|---|---|---|---|---|---|---|

← mw bits →

Increment by 1

p=8 bits

| 0 | 0 | 0 | 0 | 1 | 1 | 0 | 0 | 0 | 0 | 0 | 0 |
|---|---|---|---|---|---|---|---|---|---|---|---|

← mw bits →

Rounded output number

**FIG. 3A**

p=8 bits

| 0 | 0 | 0 | 0 | 1 | 1 | 0 | 0 | 0 | 1 | 0 | 0 |
|---|---|---|---|---|---|---|---|---|---|---|---|

Mantissa of subnormal output number

← mw bits →

p=8 bits

| 0 | 0 | 0 | 0 | 0 | 0 | 0 | 0 | 1 | 1 | 1 | 1 |
|---|---|---|---|---|---|---|---|---|---|---|---|

Mask for RTA mode

← mw bits →

p=8 bits

| 0 | 0 | 0 | 0 | 1 | 1 | 0 | 0 | 1 | 1 | 1 | 1 |
|---|---|---|---|---|---|---|---|---|---|---|---|

Applying mask to mantissa

← mw bits →

p=8 bits

| 0 | 0 | 0 | 0 | 1 | 1 | 0 | 1 | 0 | 0 | 0 | 0 |
|---|---|---|---|---|---|---|---|---|---|---|---|

Increment by 1

← mw bits →

p=8 bits

| 0 | 0 | 0 | 0 | 1 | 1 | 0 | 1 | 0 | 0 | 0 | 0 |
|---|---|---|---|---|---|---|---|---|---|---|---|

Rounded output number

← mw bits →

FIG. 3B

FIG. 3C

p=8 bits

| 0 | 0 | 0 | 0 | 1 | 1 | 0 | 0 | 0 | 1 | 0 | 0 |

Mantissa of subnormal output number

←————————— mw bits —————————→

p=8 bits

| 0 | 0 | 0 | 0 | 0 | 0 | 0 | 1 | 1 | 1 | 1 | 1 |

Generalised rounding mask

←————————— mw bits —————————→

p=8 bits

| 0 | 0 | 0 | 0 | 0 | 0 | 0 | 0 | 1 | 1 | 1 | 1 |

Right-shifted mask

←————————— mw bits —————————→

p=8 bits

| 0 | 0 | 0 | 0 | 1 | 1 | 0 | 0 | 1 | 1 | 1 | 1 |

Applying processed mask to mantissa with bitwise OR

←————————— mw bits —————————→

p=8 bits

| 0 | 0 | 0 | 0 | 1 | 1 | 0 | 1 | 0 | 0 | 0 | 0 |

Increment result at LSB

←————————— mw bits —————————→

p=8 bits

| 0 | 0 | 0 | 0 | 1 | 1 | 0 | 1 | 0 | 0 | 0 | 0 |

Truncated incremented output number

←————————— mw bits —————————→

FIG. 3D

**FIG. 4**

min exp = -14

Precision reduced by 4 relative to normal range

Exponent after normalisation $e_r$ = min exp – 4 = -18

FIG. 5

min exp = -14

Precision unchanged relative to normal range

Exponent after normalisation $e_r$ = min exp – 1 = -15

**FIG. 6**

**FIG. 7**

min exp = -14

Precision reduced by 4 relative to normal range

Exponent after normalisation $e_r$ = min exp – 5 = -18

FIG. 8

900

904

$s_i$    $e_i$    $m_i$

902

Arithmetic unit

Initial mask

Initial tracking value

906

First register

908

Mask tracking unit

912

Partial iterative result

916

Shift by 1

918

Mask fanout unit

914

+Step size

910

Rounding unit

920

shifter

**FIG. 9**

mask

| 1 | 1 | 1 |

Tracking value

| 0 | 1 | 1 | 0 | 0 |

Shifted mask

| 1 | 1 | 0 |

Tracking value incremented by step size 100

| 1 | 0 | 0 | 0 | 0 |

Fanned out mask

| 1 | 1 | 1 | 1 | 1 | 1 | 1 | 1 | 0 | 0 | 0 | 0 |

Shifted Fanned out mask

| 1 | 1 | 1 | 1 | 1 | 0 | 0 | 0 | 0 | 0 | 0 | 0 |

FIG. 10

**FIGURE 11**

1202

1204                              1206

IC definition dataset → | Layout processing | Circuit layout definition → | Integrated circuit generation | → Integrated circuit

**FIGURE 12**

$s_i$     $e_i$     $m_i$

1302 — Format Conversion Unit

1310

Rounding Unit

Mask Construction Unit

1306

$s_y$     $e_y$     $m_y$

**FIG. 13**

Europäisches
Patentamt

European
Patent Office

Office européen
des brevets

# EUROPEAN SEARCH REPORT

**Application Number**

EP 24 20 5838

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EHLIAR ANDREAS: "Area efficient floating-point adder and multiplier with IEEE-754 compatible semantics", 2014 INTERNATIONAL CONFERENCE ON FIELD-PROGRAMMABLE TECHNOLOGY (FPT), IEEE, 10 December 2014 (2014-12-10), pages 131-138, XP032762240, DOI: 10.1109/FPT.2014.7082765 [retrieved on 2015-04-08] * Sections II, IV, V; figure 3; tables I, IV * | 1-15 | INV. G06F7/483 G06F7/499 |
| A | US 2015/254066 A1 (LUTZ DAVID RAYMOND [US] ET AL) 10 September 2015 (2015-09-10) * paragraph [0035] - paragraph [0068] * | 1-15 | |
| A | US 2014/101216 A1 (GSCHWIND MICHAEL K [US] ET AL) 10 April 2014 (2014-04-10) * paragraph [0048] - paragraph [0072] * | 1-15 | |
| | | | **TECHNICAL FIELDS SEARCHED (IPC)**<br><br>G06F |

The present search report has been drawn up for all claims

| Place of search | Date of completion of the search | Examiner |
|---|---|---|
| Munich | 11 March 2025 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5838

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2025

| Patent document cited in search report | Publication date | Patent family member(s) | | Publication date |
|---|---|---|---|---|
| US 2015254066 A1 | 10-09-2015 | CN | 104899004 A | 09-09-2015 |
| | | GB | 2524377 A | 23-09-2015 |
| | | JP | 6360450 B2 | 18-07-2018 |
| | | JP | 2015170359 A | 28-09-2015 |
| | | US | 2015254066 A1 | 10-09-2015 |
| US 2014101216 A1 | 10-04-2014 | US | 2013212139 A1 | 15-08-2013 |
| | | US | 2014101216 A1 | 10-04-2014 |

EPO FORM P0459

For more details about this annex : see Official Journal of the European Patent Office, No. 12/82